# EUROPEAN PATENT APPLICATION

(11) **EP 4 733 246 A1**
(43) Date of publication of application: **29.04.2026**
(21) Application number: 24872952.7
(22) Date of filing: 26.09.2024
(51) Int. Cl.: B67D 1/00, B67D 1/08, B67D 1/12, B67D 1/07, H04N 23/57, G06K 19/06, A47J 31/44, A47J 31/02

(54) **WATER PURIFIER AND CONTROL METHOD THEREOF**

(30) Priority: 27.09.2023 KR 20230131031; 30.01.2024 KR 20240014416; 25.09.2024 KR 20240130271
(71) Applicant: Samsung Electronics Co., Ltd., Suwon-si, Gyeonggi-do 16677 (KR)
(72) Inventor: LEE, Seonjeong, Suwon-si, Gyeonggi-do 16677 (KR); YU, Jimin, Suwon-si, Gyeonggi-do 16677 (KR); KIM, Bumseup, Suwon-si, Gyeonggi-do 16677 (KR); KIM, Seokuk, Suwon-si, Gyeonggi-do 16677 (KR); LEE, Junggeun, Suwon-si, Gyeonggi-do 16677 (KR); JANG, Doyun, Suwon-si, Gyeonggi-do 16677 (KR)
(74) Representative: Gulde & Partner
(86) International application number: PCT/KR2024/014578
(87) International publication number: WO 2025/071244

(57) **Abstract**

A water purifier includes a main body, a water supply assembly connected to the main body and releasing water supplied from the main body, and a nozzle assembly detachably coupled to the water supply assembly and including an water supply path, wherein the water supply path includes an inflow port through which water from the water supply assembly flows to the nozzle assembly and a plurality of outflow ports through which water flows out of the nozzle assembly, and wherein an area of the inflow port is larger than an area of the plurality of outflow ports.

## Description

### [Technical Field]

The disclosure relates to a water purifier and a method of controlling the same.

### [Background Art]

The water purifier is a device for providing drinking water for the user by removing harmful materials contained in raw water such as tab water or ground water through various water purification methods such as precipitation, filtration and sterilization. The water purifier is arranged to filter incoming water with one or more purification filters to supply clean water to the user.

When classified based on the shape, the water purifier may be divided into a direct connection type that makes direct connection to a faucet and a storage type that stores water in a container and has the water pass a filter, and when classified by the purification principle or method, the water purifier may be divided into a natural filtration type, a direct filtration type, an ion exchange resin type, a distillation type, a reverse osmosis pressure type, etc.

For example, the direct filtration type is a method of connecting the water purifier directly to a water pipe, by which water passes through a filter due to the water pressure and thus, impurities therein are filtered off. Water purified in this way may be released through a faucet to be used as drinking water. The faucet may also be referred to as a water supply assembly.

A coffee brewing machine works by heating water and dripping the hot water over ground coffee, and extracts brewed coffee through several extraction stages such as coffee bean prewetting, first extraction, second extraction, third extraction, etc., depending on the coffee brewing recipe. In this case, coffee flavors change by the temperature and flow rate of the hot water, and steep time, so it is important to appropriately adjust the temperature and flow rate of the hot water, and steep time for each extraction stage of a coffee brewing recipe to get a desired taste.

The existing water purifier has no brewed coffee extracting function that controls a water supply operation for extracting brewed coffee, so the coffee brewing machine is indispensable to brewed coffee extraction.

### [Disclosure]

### [Technical Problem]

The disclosure provides a water purifier including a nozzle assembly coupled to a water supply assembly of the water purifier, and capable of implementing a brewed coffee extracting function by using the nozzle assembly, and a method of controlling the water purifier.

Additional aspects will be partially described below, and may be partially obvious from the following description or understood by performing the following embodiments.

### [Technical Solution]

According to an aspect of the disclosure, a water purifier includes a main body; a water supply assembly connected to the main body and releasing water supplied from the main body; and a nozzle assembly detachably coupled to the water supply assembly and including a water supply path, wherein the water supply path includes an inflow port through which water from the water supply assembly flows to the nozzle assembly; and a plurality of outflow ports through which water flows out of the nozzle assembly, and wherein an area of the inflow port is larger than an area of the plurality of outflow ports.

According to an aspect of the disclosure, a method of controlling a water purifier including a heat exchanger arranged in a main body for cooling or heating water, a water supply assembly connected to the main body and releasing water supplied from the heat exchanger and a nozzle assembly detachably coupled to the water supply assembly and releasing water to the outside includes receiving a coffee brewing recipe from an external device through a communicator or receiving a selection of a coffee brewing recipe from a user through a user interface device, and controlling the water supply assembly and the heat exchanger based on one of the received coffee brewing recipe or the selected coffee brewing recipe.

### [Description of Drawings]

The aforementioned and other aspects, features and advantages of embodiments of the disclosure may be clearly understood by combinations of the following detailed descriptions and the accompanying drawings.
FIG. 1 is a schematic diagram of a water purifier, according to an embodiment of the disclosure.
FIG. 2 is a perspective view of a water purifier, according to an embodiment of the disclosure.
FIG. 3 is a side cross-sectional view of a water purifier, according to an embodiment of the disclosure.
FIG. 4 is an enlarged view of area A shown in FIG. 3.
FIG. 5 is an exploded perspective view of a water purifier, according to an embodiment of the disclosure.
FIG. 6 is a perspective view of a water purifier, according to an embodiment of the disclosure.
FIG. 7 is a side cross-sectional view of a water purifier, according to an embodiment of the disclosure.
FIG. 8 is an enlarged view of area B shown in FIG. 7.
FIG. 9 is an exploded perspective view of a water purifier, according to an embodiment of the disclosure.
FIG. 10 illustrates a network of a water purifier, according to an embodiment of the disclosure.
FIG. 11 illustrates a control block of a water purifier, according to an embodiment of the disclosure.
FIG. 12 illustrates an example of a flowchart of a method of controlling a water purifier, according to an embodiment of the disclosure.
FIGS. 13 and 14 illustrate function activation UIs to activate a brewed coffee extracting function of a water purifier, according to an embodiment of the disclosure.
FIGS. 15 and 16 illustrate recipe selection UIs to select a coffee brewing recipe of a water purifier, according to an embodiment of the disclosure.
FIGS. 17 to 20 illustrate a water supply operation UI to guide a water supply operation based on a coffee brewing recipe received from an external device on a user interface device of a water purifier, according to an embodiment of the disclosure.
FIGS. 21 to 23 illustrate recipe selection UIs to receive a selection of coffee brewing recipe on a user interface device of a water purifier, according to an embodiment of the disclosure.
FIG. 24 illustrates a water supply operation UI to guide a water supply operation based on a coffee brewing recipe selected on a user interface device of a water purifier, according to an embodiment of the disclosure.
FIG. 25 is a control block diagram of a water purifier, according to another embodiment of the disclosure.
FIG. 26 illustrates an example of a flowchart of a method of controlling a water purifier, according to another embodiment of the disclosure.
FIG. 27 illustrates a function activation UI to activate a brewed coffee extracting function of a water purifier, according to another embodiment of the disclosure.
FIG. 28 illustrates a recipe edition UI to edit a coffee brewing recipe of a water purifier, according to another embodiment of the disclosure.
FIG. 29 illustrates a process of hiding some of coffee brewing recipes of a water purifier, according to another embodiment of the disclosure.
FIG. 30 illustrates a process of adding a branded recipe to coffee brewing recipes of a water purifier, according to another embodiment of the disclosure.
FIGS. 31 to 33 illustrate a process of creating 'my recipe' among coffee brewing recipes of the water purifier, according to another embodiment of the disclosure.
FIGS. 34 to 37 illustrate recipe selection operations to select a coffee brewing recipe in a water purifier, according to another embodiment of the disclosure.
FIGS. 38 to 41 illustrate recipe selection operations to select a newly received coffee brewing recipe in a water purifier, according to another embodiment of the disclosure.
FIG. 42 illustrates an example of a water supply operation depending on the coffee brewing recipe in a water purifier, according to another embodiment of the disclosure.
FIG. 43 illustrates another example of a water supply operation depending on the coffee brewing recipe in a water purifier, according to another embodiment of the disclosure.
FIG. 44 illustrates a water supply amount setting operation to set an amount of water supply for a 'strong' recipe in a water purifier, according to another embodiment of the disclosure.

### [Modes of the Invention]

It is understood that various embodiments of the disclosure and associated terms are not intended to limit technical features herein to particular embodiments, but encompass various changes, equivalents, or substitutions.

Like reference numerals may be used for like or related elements throughout the drawings.

The singular form of a noun corresponding to an item may include one or more items unless the context states otherwise.

Throughout the specification, "A or B", "at least one of A and B", "at least one of A or B", "A, B or C", "at least one of A, B and C", and "at least one of A, B, or C" may each include any one or all the possible combinations of A, B and C.

The expression "and/or" is interpreted to include a combination or any of associated elements.

Terms like "first", "second", etc., may be simply used to distinguish an element from another, without limiting the elements in a certain sense (e.g., in terms of importance or order).

When an element is mentioned as being "coupled" or "connected" to another element with or without an adverb "functionally" or "operatively", it means that the element may be connected to the other element directly (e.g., wiredly), wirelessly, or through a third element.

It will be further understood that the terms "comprise", "has", etc., when used in this specification, specify the presence of stated features, integers, steps, operations, elements, parts or combinations thereof, but do not preclude the possible presence or addition of one or more other features, integers, steps, operations, elements, components, and/or groups thereof.

When an element is mentioned as being "connected to", "coupled to", "supported on" or "contacting" another element, it includes not only a case that the elements are directly connected to, coupled to, supported on or contact each other but also a case that the elements are connected to, coupled to, supported on or contact each other through a third element.

Throughout the specification, when an element is mentioned as being located "on" another element, it implies not only that the element is abut on the other element but also that a third element exists between the two elements.

A water purifier according to various embodiments will now be described in detail in connection with the accompanying drawings.

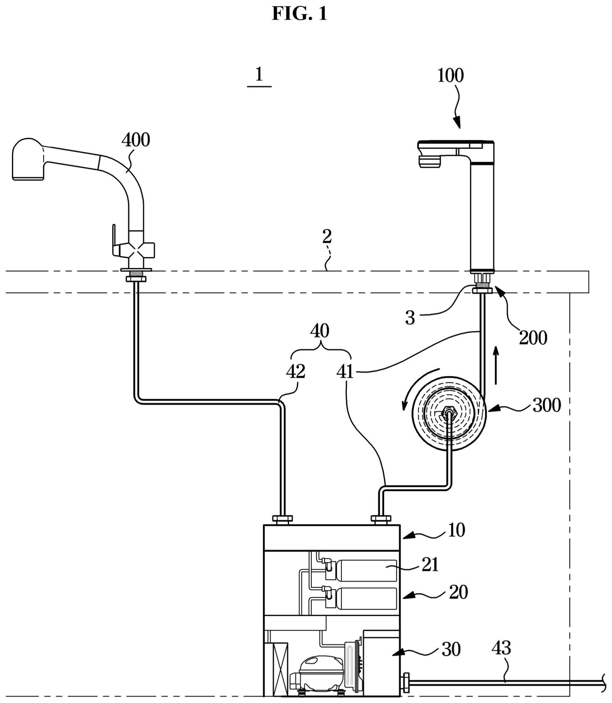

FIG. 1 is a schematic diagram of a water purifier, according to an embodiment.

Referring to FIG. 1, a water purifier 1 may include a main body 10, and a water supply assembly 100 connected to the main body 10 for releasing water out of the main body 10. The main body 10 may be arranged in a space under a kitchen workbench 2, and at least a portion of the water supply assembly 100 may be arranged to be exposed to the top of the kitchen workbench 2. The kitchen workbench 2 may include a sink part. The sink part may include a sink and a kitchen countertop. The water supply assembly 100 may also be referred to as a water supply unit 100 and/or a water supply module 100. The water supply assembly 100 may include a faucet.

The water supply assembly 100 may be installed on the top of the kitchen workbench 2. The water supply assembly 100 may be installed on top of the sink part. The water supply assembly 100 may be rotationally arranged on the top of the kitchen workbench 2. The water supply assembly 100 may be connected to the main body 10 through a connection member 40.

The main body 10 may be arranged inside the kitchen workbench 2. The main body 10 may include a filter unit 20 including at least one filter 21 and a heat exchanger 30 arranged to cool or heat the water purified by the filter unit 20. The heat exchanger 30 may include a refrigeration cycle device including a compressor, a condenser, an expansion valve and an evaporator, and a heater.

The main body 10 may receive raw water such as tap water through an external pipe 43.

The connection member 40 connected to the main body 10 may include a first tube 41 connected to the water supply assembly 100, and a second tube 42 connected to a faucet 400 installed on the kitchen workbench 2. The first tube 41 may include a plurality of first tubes 41.

An installation member 3 may be provided in the kitchen workbench 2 for installing the water supply assembly 100. The installation member 3 may be formed by opening at least a portion of the kitchen workbench 2. The first tube 41 and the water supply assembly 100 may be connected through the installation member 30 of the kitchen workbench 2.

The water supply assembly 100 may be rotationally installed at the installation member 3. The water purifier 1 may include a rotating device 200 for rotationally installing the water supply assembly 100 at the installation member 3. The rotating device 200 may be coupled to the kitchen workbench 2.

The water purifier 1 may include a tube fixing device 300 arranged to secure the first tube 41. The tube fixing device 300 may be arranged inside the kitchen workbench 2. The tube fixing device 300 may be arranged between the main body 10 and the water supply assembly 100. The tube fixing device 300 may be fixed to at least one of the main body 10 and the kitchen workbench 2. The tube fixing device 300 may be wound with portions of the first tube 41, and as the portions of the first tube 41 wind or unwind from the tube fixing device 300, the length of the first tube 41 may extend or be shortened.

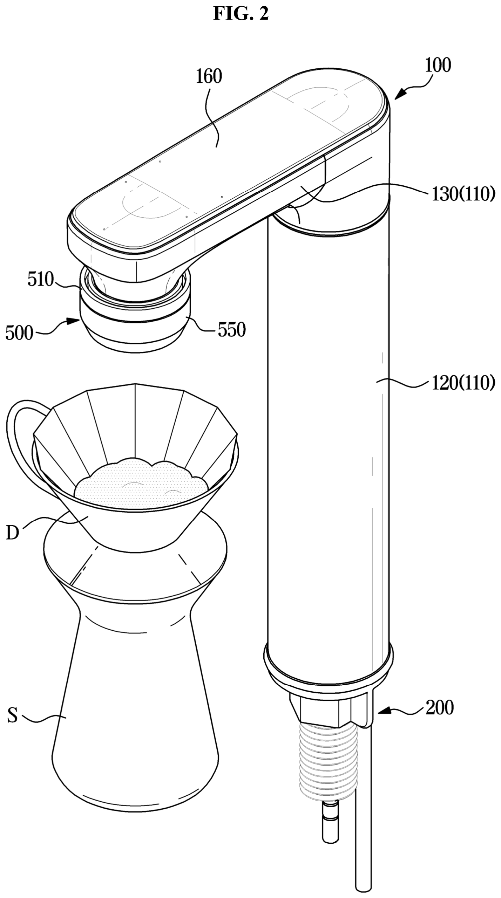

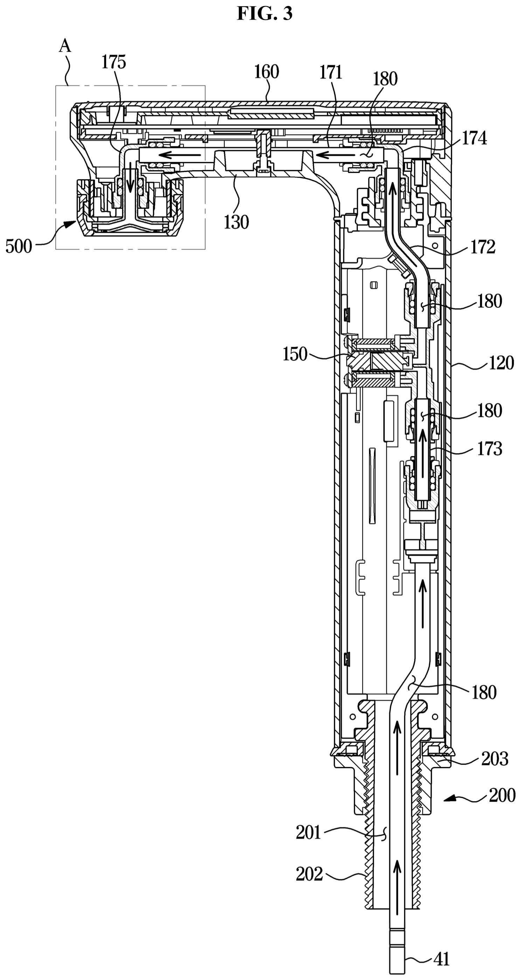

FIG. 2 is a perspective view of a water purifier, according to an embodiment. FIG. 3 is a side cross-sectional view of a water purifier, according to an embodiment.

Referring to FIGS. 2 and 3, the water supply assembly 100 may include a housing 110 that forms the exterior and has various parts arranged therein. The housing 110 may be rotationally coupled to the kitchen workbench 2 at one end. For example, the housing 110 may include a neck housing 120 that extends vertically, and a head housing 130 that extends horizontally from the top of the neck housing 120. The neck housing 120 may be a first housing 120 and the head housing 130 may be a second housing 130. The housing 110 may be coupled to the kitchen workbench 2. For example, the bottom end of the neck housing 12 may be rotationally coupled to the kitchen workbench 2 by the rotating device 200.

The neck housing 120 and the head housing 130 may be separately formed and then coupled together, or may be integrally formed.

The neck housing 120 may be perpendicular or inclined to a surface of the kitchen workbench 2 on which the installation member 3 is formed.

A hand drip device may be placed under the water supply assembly 100. For example, the hand drip device may be placed under the head housing 130 and the nozzle assembly 500. The hand drip device may include a dripper D and a server S. The user may constantly supply water from the water supply assembly 100 to the dripper D where there is ground coffee. The water that has passed the ground coffee in the dripper D may be filtered and then stored in the server S.

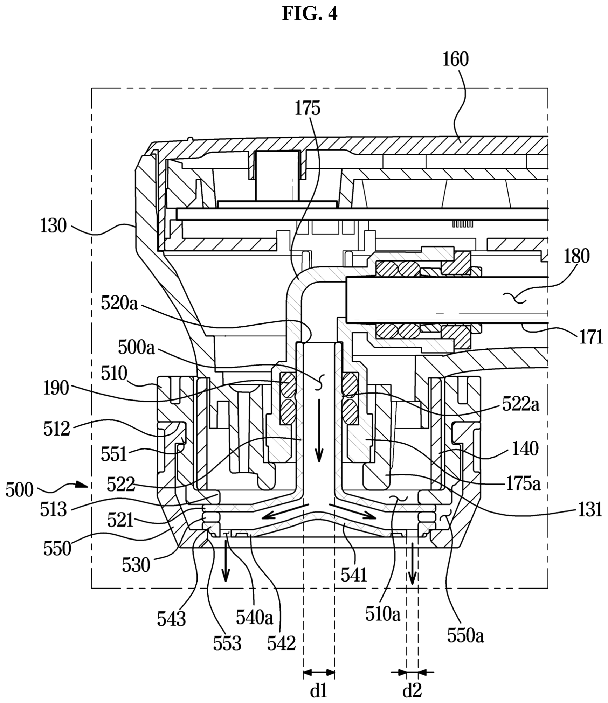

The water supply assembly 100 may include at least one pipe 171, 172, 173, 174 and 175 arranged in the housing 110. The water supplied from the main body 10 may flow in the pipes 171, 172, 173, 174 and 175. The at least one pipe 171, 172, 173, 174 and 175 may form a housing flow path 180 through which the water supplied from the main body 10 may flow. The pipes 171, 172, 173, 174 and 175 may be connected to the nozzle assembly 500. The housing flow path 180 may be connected to an outflow port 540a (see FIG. 4).

The at least one pipe 171, 172, 173, 174 and 175 may include a first pipe 171, a second pipe 172, a third pipe 173, a fourth pipe 174 and a fifth pipe 175. An end of the third pipe 173 may be connected to the first tube by a connector, and the other end of the third pipe 173 may be connected to a water supply valve 150. An end of the second pipe 172 may be connected to the water supply valve 150, and the other end of the second pipe 172 may be connected to the third pipe 171 by the fourth pipe 174. The first pipe 171 may be connected to the nozzle assembly 500 by the fifth pipe 175. At least some portions of the fourth pipe 174 and the fifth pipe 175 may be bent. Two or more of the first pipe 171, the second pipe 172, the third pipe 173, the fourth pipe 174 and the fifth pipe 175 may be integrally formed. The disclosure is not, however, limited thereto, and the third pipe 173 may be omitted and the first tube 41 may be connected directly to the water supply valve 150.

The water supply assembly 100 may include the water supply valve 150 to turn on or off the water. The water supply valve 150 may control whether to discharge the water through the outflow port 540a. The water supply valve 150 may be arranged in the housing flow path 180. The water supply valve 150 may open or close the housing flow path 180. For example, the water supply valve 150 may control the water flowing to the second pipe 172 from the third pipe 173. The water supply valve 150 may selectively supply water into the pipes 171, 172, 174 and 175 arranged on a side opposite to the first tube 41 based on the water supply valve 150.

The water supply valve 150 may be arranged in the housing 110. The water supply valve 150 may be arranged in the neck housing 120.

The water supply assembly 100 may include a user interface device 160 for receiving a touch input and outputting an image. The user interface device 160 may form a top surface of the water supply assembly 100. For example, the head housing 130 may be opened upward, and the user interface device 160 may be coupled to the top side of the open head housing 130 to cover the internal space of the head housing 130 having various electronic components arranged therein. The user interface device 160 may be the head housing 130.

The type and position of the user interface device 160 is not, however, limited thereto, and any type and position that allows an input of, but not exclusively, a water supply command, a type of the water to be supplied, and/or hot water set temperature to be received from the user may be used. An example of the user interface device 160 corresponding to a display that is able to display various information and receive a touch input will now be described.

The user interface device 160 may be arranged on the top of the nozzle assembly 500. The user interface device 160 may be arranged on a side of the other end of the head housing 130 opposite to the one end of the head housing 130 connected to the neck housing 120. For example, the user interface device 160 may horizontally extend to the one end of the head housing 130 from the other end of the head housing 130.

The user interface device 160 may be electrically connected to the main body 10 by electric wires or wirelessly. The user interface device 160 may receive a touch input to select a type of water desired by the user and/or a touch input to select a water supply amount to be released from the water supply assembly 100, and transmit an input signal corresponding to the received touch input to the main body 10. When the input signal is received from the user interface device 160 and a water supply command is input, the main body 10 may supply the type of water selected according to the input signal to the water supply assembly 100 or control an amount of the water to be supplied to the water supply assembly 100 according to the input signal, and supply hot water heated at the hot water set temperature to the water supply assembly 100.

For example, the water supply amount may be selected to be one of 120 ml, 500 ml, 1000 ml or continuous water release. The continuous water release may be a state of continuously releasing water until the user turns off the water.

The water released from the water supply assembly 100 may be classified into purified water, cold water and hot water based on whether the water is cooled or heated. The purified water, cold water and hot water may correspond to waters having different temperatures. For example, the purified water may refer to water supplied to the water supply assembly 100 without additional cooling or heating after the raw water is filtered by the filter 21. Furthermore, for example, the cold water may refer to water supplied to the water supply assembly 100 in a state cooled by the heat exchanger 30 after the raw water is filtered by the filter 21. Moreover, for example, the hot water may refer to water supplied to the water supply assembly 100 in a state heated by the heat exchanger 30 after the raw water is filtered by the filter 21. That is, the purified water, cold water and hot water may correspond to waters having different temperatures. Of the cold water, purified water and hot water, the cold water has the lowest temperature and the purified water has a temperature higher than that of the cold water and lower than that of the hot water. The selecting of the water type may correspond to selecting one of the purified water, the cold water and the hot water classified based on temperature.

The disclosure is not, however, limited thereto. For example, the water released from the water supply assembly 100 may be classified based on the chemical composition such as a concentration of a certain ion or a state of matters, and the selecting of the water type may correspond to selecting one of different types of water classified on such a basis.

The display 160 may output an image button for the user to input a selection of the purified water, cold water or hot water or a selection of a water supply amount. The user may operate the main body 10 by touching an area of the user interface device 160 on which the image button appears.

The water supply assembly 100 may include a rotating device 200 for rotationally securing the housing 110 to the installation member 3. The rotating device 200 may include a rotating bracket 202 of a cylindrical shape rotationally coupled to the lower end of the neck housing 120 and having a through hole 201 formed for the first tube 41 to pass through, and a mounting member 203 to which the rotating bracket 202 is inserted and fixed. For example, screw threads may be formed on the outer side of the rotating bracket 202, and while the rotating bracket 202 passes through the installation member 3, the mounting member 203 may be screwed to a portion of the rotating bracket 202 that passes through the installation member 3.

The water purifier 1 may further include the nozzle assembly 500. The nozzle assembly 500 may allow a stream of water to be supplied to the user from the water supply assembly 100 continuously and released without being cut off. The nozzle assembly 500 may be detachably coupled to the water supply assembly 100. For example, the nozzle assembly 500 may be coupled to the housing 110 at the other end of the housing 110 opposite to the end of the housing 110 coupled to the kitchen workbench 2. For example, the nozzle assembly 500 may be arranged at the other end of the head housing 130 opposite to the end of the head housing 130 coupled to the neck housing 120. When the user presses the nozzle assembly 500 from bottom to top toward the water supply assembly 100, the nozzle assembly 500 and the water output assembly 100 may be coupled to each other. The nozzle assembly 500 may also be referred to as a nozzle unit 500.

As the nozzle assembly 500 is coupled to the water supply assembly 100, the at least one pipe 171, 172, 173, 174 or 175 and the nozzle assembly 500 may be connected to each other. For example, a first member 520 may be inserted into the fifth pipe 175 (see FIG. 4), and through this, the water in the housing flow path 180 may flow into the nozzle assembly 500.

The nozzle assembly 500 may form the outflow port 540a through which the water is released out of the water supply assembly 100. The nozzle assembly 500 may extend vertically. The nozzle assembly 500 may also be included in the water supply assembly 100.

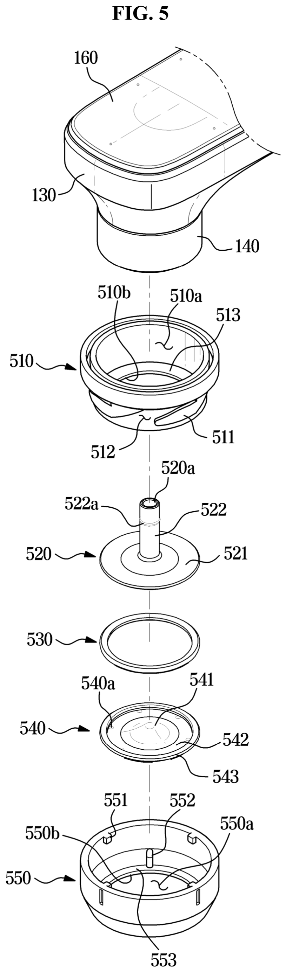

FIG. 4 is an enlarged view of a water purifier, according to an embodiment. FIG. 4 is an enlarged view of area A shown in FIG. 3. FIG. 5 is an exploded perspective view of a water purifier, according to an embodiment.

Referring to FIGS. 4 and 5, the water supply assembly 100 may further include a cover member 140. The cover member 140 may cover a portion 175a of the fifth pipe 175 and a mounting portion 131 of the head housing 130. For example, the cover member 140 may enclose the portion 175a of the fifth pipe 175 and the mounting portion 131 of the head housing 130. The cover member 140 may be placed on the inner side of cases 510 and 550 while the nozzle assembly 500 is mounted on the water supply assembly 100.

The nozzle assembly 500 may be coupled to the water supply assembly 100. For example, the nozzle assembly 500 may be coupled to the head housing 130. The nozzle assembly 500 may be coupled to the head housing 130 on the side from which the water in the housing 110 is released. For example, the nozzle assembly 500 may be arranged at the other end of the head housing 130 opposite to the end of the head housing 130 coupled to the neck housing 120. The water in the housing 110 may be released out of the housing 110 and supplied to the user through the nozzle assembly 500 without being cut off.

The nozzle assembly 500 may include a water supply path 500a. The water supply path 500a may be formed in the nozzle assembly 500. The water supply path 500a may guide the water in the nozzle assembly 500 out of the housing 110 and the nozzle assembly 500. The water supply path 500a may be connected to the housing flow path 180. The water flowing to the water supply path 500a through the housing flow path 180 may flow out of the housing 110 and the nozzle assembly 500 through the outflow port 540a. The water supply path 500a may include an inflow port 520a and the outflow port 540a.

The nozzle assembly 500 may include flow path members 520, 530 and 540. The flow path members 520, 530 and 540 may form the water supply path 500a inside. The flow path members 520, 530 and 540 may guide the water that has passed the housing 110 to the outside of the nozzle assembly 500. The flow path members 520, 530 and 540 may be provided in the plural. The plurality of flow path members 520, 530 and 540 may include the first member 520, the second member 530 and the third member 540. Without being limited thereto, the flow path members 520, 530 and 540 may be integrally formed into one flow path member 520, 530 and 540.

The first member 520, the second member 530 and the third member 540 may form the water supply path 500a inside. The first member 520, the second member 530 and the third member 540 may be a first flow path member 520, a second flow path member 530 and a third flow path member 540. The plurality of flow path members 520, 530 and 540 may be arranged between the first case 510 and the second case 550.

The first member 520 may be arranged on the second member 530 and third member 540. The first member 520 may cover the top of the second member 530 and third member 540. The first member 520 may be arranged on the second member 530 and third member 540 to form a portion of the water supply path 500a. The inflow port 520a may be formed at the first member 520. For example, the inflow port 520a may be formed inside the upper end of the first member 520. The first member 520 may include a cock.

The first member 520 may include a first unit 521 and a second unit 522. The first unit 521 may form a lower portion of the first member 520, and the second unit 522 may form an upper portion of the first member 520. The first unit 521 may extend horizontally, and the second unit 522 may extend vertically. The first unit 521 and the second unit 522 may be connected to form a portion of the water supply path 500a inside. A fixer 522a fixed by a fixing member 190 may be arranged on the second unit 522. The fixer 522a may protrude radially from the outer surface of the second unit 522. The fixer 522a may be arranged between a plurality of fixing members 190 arranged in the vertical direction. While the nozzle assembly 500 is being coupled to the head housing 130, the fixer 522a and the plurality of fixing members 190 may be arranged between the first unit 521 and the fifth pipe 175. When the user presses the nozzle assembly 500 from bottom to top toward the water supply assembly 100, the nozzle assembly 500 and the water output assembly 100 may be coupled to each other with the fixer 522a arranged between the plurality of fixing members 190. The fixer 522a may be a mounting part.

The first member 520 may be inserted into the fifth pipe 175. For example, the portion 175a of the fifth pipe 175 may be mounted on the mounting part 131 arranged at one end of the head housing 130. The first member 520 may be coupled to the fifth pipe 175. For example, the second unit 522 of the first member 520 may be connected to the fifth pipe 175 so that the housing flow path 180 and the water supply path 500a are linked to each other.

The second member 530 may be arranged between the first member 520 and the third member 540. The second member 530 may be arranged under the first member 520 and on the top of the third member 540. The second member 530 may be arranged between the first member 520 and the third member 540 to form a portion of the water supply path 500a. The second member 530 may tightly close the space between the first member 520 and the third member 540. The second member 530 may be shaped like a ring. The second member 530 may include an O-ring.

The third member 540 may be arranged under the first member 520 and second member 530. The third member 540 may cover the bottom portion of the first member 520 and second member 530. The third member 540 may be arranged under the first member 520 and second member 530 to form a portion of the water supply path 500a. The outflow port 540a may be formed at the third member 540. For example, the outflow port 540a may be formed at a base 542 of the third member 540. The third member 540 may include a nozzle.

The third member 540 may include a guide part 541, the base 542 and an edge part 543.

The guide part 541 may guide the water in the water supply path 500a to be directed to the outflow port 540a. The guide part 541 may be slopingly formed. For example, the guide part 541 may be sloped downward from the middle of the third member 540 to the outer side in the radial direction. For example, the guide part 541 may protuberate inward in the radial direction of the third member 540.

The guide part 541 may be connected to the base 542. The water guided by the guide part 541 may flow to the base 542. The base 542 may be arranged at an outer side of the radial direction of the guide 541. For example, the base 542 may be flatly formed. The outflow port 540a may be formed at the base 542. The water guided by the guide part 541 may flow out of the nozzle assembly 500 through the outflow port 540a formed at the base 542. The outflow port 540a may be provided in the plural. The plurality of outflow ports 540a may be formed along the circumference of the base 542. For example, there may be six outflow ports 540a arranged at the base 542.

The edge part 543 may form edges of the third member 540. The edge part 543 may be arranged at the outer side of the radial direction of the guide 541 and the base 542. The edge part 543 may support the first member 520 and the second member 530. The edge part 543 may be supported by the second case 550.

For example, the first member 520 and the third member 540 may include stainless steel. Furthermore, for example, the second member 530 may include rubber.

A diameter d2 of the outflow port 540a may be smaller than a diameter d1 of the inflow port 520a. A total area of the plurality of outflow ports 540a may be smaller than the area of the inflow port 520a. For example, the diameter d2 of the outflow port 540a may be smaller than the diameter d1 of the inner side of the second unit 522, and the total area of the plurality of outflow ports 540a may be smaller than an area of the water supply path 500a in the second unit 522. Accordingly, more water may flow into the water supply path 500a through the inflow port 520a than the water released through the outflow port 540a, and the water may be constantly released out of the nozzle assembly 200 from the outflow port 540a without being cut off. For example, the diameter d2 of the outflow port 540a may be 1.0 to 1.5 mm.

As interest in hand drip coffee grows, there is a demand for using a water purifier to supply water at a constant flow rate into the dripper D. In an embodiment of the disclosure, it is possible to minimize the water hitting the dripper D and splashing out along with the coffee due to a drop when the water is released.

As the water purifier including the nozzle assembly 500 releases water at a constant flow rate without cutting off the water, it may uniformly wet the ground coffee in the dripper D and minimize splashing of the released water.

The nozzle assembly 500 may include the cases 510 and 550. The cases 510 and 550 may accommodate the flow path members 520, 530 and 540. The cases 510 and 550 may prevent a rise of the temperature of the flow path members 520, 530 and 540 that form the water supply path 500a even when the hot water is released, thereby preventing the user from getting burned. The cases 510 and 550 may be formed of a low thermal-conductive material. For example, the cases 510 and 550 may be molded.

Only some portions of the cases 510 and 550 may come into contact with the flow path members 520, 530 and 540. For example, as the flow path members 520, 530 and 540 may be formed of a high thermal-conductive material, the cases 510 and 550 may be formed to have a minimum area that contacts the flow path members 520, 530 and 540, thereby minimizing the case 510 and 550 receiving heat and getting hot even when the hot water passes the water supply path 500a.

The cases 510 and 550 may be detachably coupled to and/or mounted on the head housing 130. While the nozzle assembly 500 is coupled to the head housing 130, the cases 510 and 550 may cover the cover member 140 and may be arranged on the outer side of the cover member 140. As the cases 510 and 550 may be separated from the head housing 130 after being used for a certain period of time, it is possible to clean the inside of the cases 510 and 550.

The cases 510 and 550 may be provided in the plural. The plurality of cases 510 and 550 may include the first case 510 and the second case 550. The first case 510 may be an upper case, a first cover or an upper cover, and the second case 550 may be a lower case, a second cover or a lower cover. It is not, however, limited thereto, and the cases 510 and 550 may be integrally formed into a single case.

The first case 510 and the second case 550 may accommodate the cover member 140, the flow path members 520, 530 and 540, a portion 131 of the head housing 130, a portion of the fifth pipe 175 inside. For example, the cover member 140, the portion 131 of the head housing 130, the portion of the fifth pipe 175 and a portion of the first member 520 may be accommodated in an internal space 510a of the first case 510. Furthermore, for example, another portion of the first member 520, the second member 530 and the third member 540 may be accommodated between the first case 510 and the second case 550. Moreover, the first case 550, the cover member 140, the flow path members 520, 530 and 540, a portion 130 of the head housing 130 and a portion of the fifth pipe 175 may be accommodated in an internal space 550a of the second case 550.

At the first case 510, the internal space 510a and an opening 510b may be formed. For example, a portion of the first member 520 may pass through the opening 510b.

The first case 510 may include a first mounting projection 511 and a mounting groove 512. The first mounting projection 511 may protrude from the outer surface of the first case 510 to form the mounting groove 512. A second mounting projection 551 may be inserted to the mounting groove 512. The first mounting projection 511 may be spirally formed along the circumference of the first case 510. Accordingly, the mounting groove 510 may also be spirally formed along the circumference of the first case 510, and the second case 550 may be rotated to be coupled to the first case 510.

At the second case 550, the internal space 550a and an opening 550b may be formed. The opening 550b of the second case 550 may be open at the bottom. For example, the water of the outflow port 540a may flow out of the nozzle assembly 500 through the opening 550b.

The second case 550 may include the second mounting projection 551. The second mounting projection 551 may protrude inward of the second case 550 from the inner surface of the second case 550. The second mounting projection 551 may be inserted to and/or mounted on the mounting groove 512. The second mounting projection 551 may be formed at the top of the second case 550. The second mounting projection 551 may be provided in the plural, and the plurality of second mounting projections 551 may be arranged along the circumference of the second case 550. The first case 510 and the second case 550 may be detachably coupled to each other through the first mounting projection 511, the second mounting projection 551 and the mounting groove 512.

As the first case 510 and the second case 550 may be separated from each other, it is possible to clean each of the first case 510, the second case 550 and the flow path members 520, 530 and 540 by separating the nozzle assembly 500 from the water supply assembly 100 after the use of a certain period of time.

The second case 550 may further include a contact projection 552. The contact projection 552 may protrude inward of the second case 550 from the inner surface of the second case 550.

The contact projection 552 may be formed on a lower portion of the second case 550. The contact projection 552 may be formed farther down than the second mounting projection 551. The contact projection 552 may be provided in the plural, and the plurality of contact projections 552 may be arranged along the circumference of the second case 550.

The plurality of contact projections 552 may reduce the area of contact between the flow path members 520, 530 and 540 and the second case 550. For example, the plurality of contact projections 552 may come into contact with the sides of the flow path members 520, 530 and 540 to minimize the contact area between the flow path members 520, 530 and 540 and the second case 550. The plurality of contact projections 552 may be arranged to enclose the flow path members 520, 530 and 540.

As the flow path members 520, 530 and 540 may be formed of a high thermal-conductive material, the second case 550 and the flow path members 520, 530 and 540 may be formed to have a minimum contact area, thereby minimizing the cases 510 and 550 receiving heat and getting hot even when the hot water passes the water supply path 500a formed inside the flow path members 520, 530 and 540.

The cases 510 and 550 may include guide projections 513 and 553. The guide projections 513 and 553 may guide the flow path members 520, 530 and 540 into positions to be placed. For example, the guide projections 513 and 533 may have the flow path members 520, 530 and 540 placed between the first case 510 and the second case 550. The guide projections 513 and 553 may come into contact with the flow path members 520, 530 and 540. The guide projections 513 and 553 may be position guide projections 513 and 553. For example, as the flow path members 520, 530 and 540 may be formed of a high thermal-conductive material, the cases 510 and 550 may come into contact with the flow path members 520, 530 and 540 through the guide projections 513 and 553, thereby minimizing the contact area between the cases 510 and 550 and the flow path members 520, 530 and 540. Accordingly, it may minimize the cases 510 and 550 receiving heat and getting hot even when hot water is passing the water supply path 500a.

For example, the first case 510 may include the first guide projection 513. The first guide projection 513 may contact the cover member 140 and the first member 520. The first guide projection 513 may protrude inward from the circumference of the first case 510. The first guide projection 513 may form the first opening 510b. While the first case 510 and the second case 550 are being coupled together, the first guide projection 513 may be arranged above the flow path members 520, 530 and 540.

For example, the second case 550 may include the second guide projection 553. The second guide projection 553 may contact the third member 540. The second guide projection 553 may protrude inward from the circumference of the second case 550. The second guide projection 553 may form the second opening 550b. While the first case 510 and the second case 550 are being coupled together, the second guide projection 553 may be arranged under the flow path members 520, 530 and 540.

The first case 510, the second case 550 and the flow path members 520, 530 and 540 may be detachably coupled together. For example, the third member 540, the second member 530 and the first member 520 may be arranged in sequence in the internal space 550a of the second case 550. Subsequently, the first case 510 may be coupled to the second case 550 on the first member 520. While the first case 510 and the second case 550 are being coupled together, the flow path members 520, 530 and 540 may be arranged between the first case 510 and the second case 550 by the first guide projection 513 and the second guide projection 553. The second member 530 may be compressed to seal a space between the first member 520 and the third member 540. The second member 530 may include a sealing member 530.

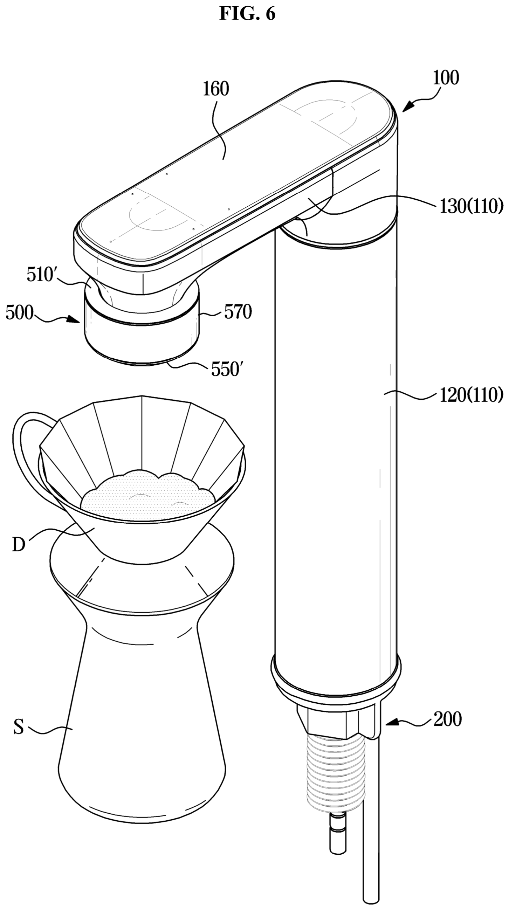

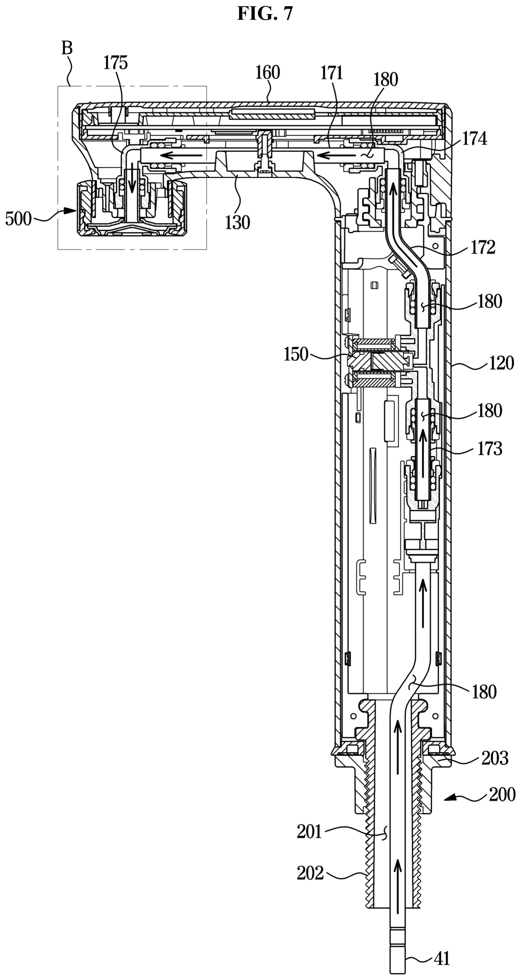

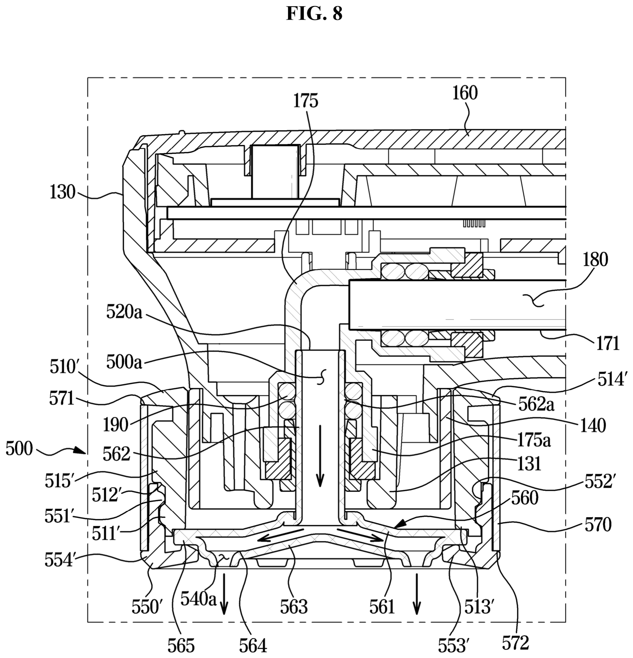

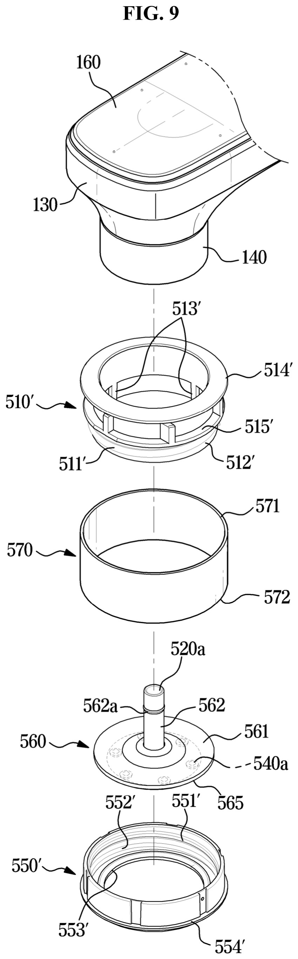

FIG. 6 is a perspective view of a water purifier, according to an embodiment of the disclosure. FIG. 7 is a side cross-sectional view of a water purifier, according to an embodiment of the disclosure. FIG. 8 is an enlarged view of area B shown in FIG. 7. FIG. 9 is an exploded perspective view of a water purifier, according to an embodiment of the disclosure.

Descriptions overlapping those of the aforementioned embodiment(s) may not be repeated. The same parts as those described above will be given the same reference numerals, and the detailed description thereof will not be repeated.

When compared to the nozzle assembly 500 shown in FIGS. 2 to 5, the nozzle assembly 500 shown in FIGS. 6 to 9 may include a case 510' and 550' and a flow path member 560. The case 510' and 550' is different in shape from the case 510 and 550 but may have substantially the same function. The flow path member 560 is provided in a single component, and may perform substantially the same function as the flow path members 520, 530 and 540. The nozzle assembly 500 may further include a decoration cover 570.

The nozzle assembly 500 may include the flow path member 560. The flow path member 560 may form the water supply path 500a inside. The flow path member 560 may guide the water that has passed the housing 110 to the outside of the nozzle assembly 500. The flow path member 560 may include the inflow port 520a and the outflow port 540a. The water supply path 500a may extend from the inflow port 520a to the outflow port 540a.

The flow path member 560 may be accommodated in the case 510' and 550'. At least a portion of the flow path member 560 may be arranged between the first case 510' and the second case 550'.

The flow path member 560 may include a body unit 561. For example, the body unit 561 may have substantially the same function as the aforementioned first unit 521. The flow path member 560 may include an extension 562. For example, the extension 562 may have substantially the same function as the aforementioned second unit 522. The inflow port 520a may be formed at the extension 562.

The body unit 561 and the extension 562 may form an upper portion of the flow path member 560. The body unit 561 may extend horizontally, and the extension 562 may extend vertically. The body unit 561 and the extension 562 may be connected to form a portion of the water supply path 500a inside. A fixer 562a fixed by a fixing member 190 may be arranged on the extension 562. The fixer 562a may protrude radially from the outer surface of the extension 562. The fixer 562a may be arranged between a plurality of fixing members 190 arranged in the vertical direction. While the nozzle assembly 500 is being coupled to the head housing 130, the plurality of fixing members 190 may be arranged between the flow path member 560 and the fifth pipe 175. When the user presses the nozzle assembly 500 upward from below toward the water supply assembly 100, the nozzle assembly 500 and the water output assembly 100 may be coupled to each other with the fixer 562a arranged between the plurality of fixing members 190. The fixer 562a may be a mounting part.

The flow path member 560 may be inserted into the fifth pipe 175. For example, the portion 175a of the fifth pipe 175 may be mounted on the mounting part 131 arranged at one end of the head housing 130. The flow path member 560 may be coupled to the fifth pipe 175. For example, the extension 562 of the flow path member 560 may be connected to the fifth pipe 175 so that the housing flow path 180 and the water supply path 500a are linked to each other.

The fluid path member 560 may include a guide part 563. For example, the guide part 563 may have substantially the same function as the aforementioned guide part 541. The fluid path member 560 may include a base 564. For example, the base 564 may perform substantially the same function as the aforementioned base 542. The fluid path guide 560 may include an edge part 565. For example, the edge part 565 may perform substantially the same function as the aforementioned edge portion 543.

The guide part 563 may guide the water in the water supply path 500a toward the outflow port 540a. The guide part 563 may be spaced from the body unit 561 to form a portion of the water supply path 500a. The guide part 563 may be slopingly formed. For example, the guide part 563 may be sloped downward from the middle of the flow path member 560 to the outer side in the radial direction. For example, the guide part 563 may protuberate inward in the radial direction of the flow path member 560.

The guide part 563 may be connected to the base 564. The water guided by the guide part 563 may flow to the base 564. The base 564 may be spaced from the body unit 561 to form a portion of the water supply path 500a. The base 564 may be arranged at an outer side of the radial direction of the guide part 563. For example, the base 564 may be flatly formed. The outflow port 540a may be formed at the base 564. The water guided by the guide part 563 may flow out of the nozzle assembly 500 through the outflow port 540a formed at the base 564. The outflow port 540a may be provided in the plural. The plurality of outflow ports 540a may be formed along the circumference of the base 564. For example, there may be six outflow ports 540a arranged at the base 564. However, there is no limitation to the number of outflow ports 540a.

The edge part 565 may be arranged at the outer side of the radial direction of the guide part 563 and the base 564. The edge part 565 may be arranged to support the body unit 561. The edge part 565 may be arranged to come into contact with the body unit 561. The edge part 565 may be supported by the second case 550'. As will be described later, the edge part 565 may be supported by a second guide projection 553' of the second case 550'.

The flow path member 560 may be provided as a single component. The flow path member 560 may be formed of a plurality of members which are formed integrally. For example, the flow path member 560 may be formed by soldering the first member 520 and the third member 540. The flow path member 560 is provided as a single component, thereby eliminating the need to disassemble or assemble the flow path member 560 for maintenance and repair of the flow path member 560 and reducing and/or preventing water leakage.

The nozzle assembly 500 may include the case 510' and 550'. The cases 510' and 550' may accommodate the flow path member 560. The case 510' and 550' may prevent a rise of the temperature of the flow path member 560 that forms the water supply path 500a even when the hot water is released, thereby preventing the user from getting burned. The case 510' and 550' may be formed of a low thermal-conductive material. For example, the case 510' and 550' may be molded.

The case 510' and 550' may merely partially contact the flow path member 560. For example, as the flow path member 560 may be formed of a high thermal-conductive material, the case 510' and 550' may be formed to have a minimum area that contacts the flow path member 560, thereby minimizing the case 510' and 550' receiving heat and getting hot even when the hot water is passing the water supply path 500a.

The case 510' and 550' may be detachably coupled to and/or mounted on the head housing 130. While the nozzle assembly 500 is coupled to the head housing 130, the cases 510' and 550' may cover the cover member 140 and may be arranged on the outer side of the cover member 140. As the case 510' and 550' may be separated from the head housing 130 after being used for a certain period of time, it is possible to clean the inside of the case 510' and 550'.

The case 510 and 550' may include a plurality of cases 510' and 550'. The plurality of cases 510' and 550' may include the first case 51'0 and the second case 550'. The first case 510' may be an upper case, a first cover or an upper cover, and the second case 550' may be a lower case, a second cover or a lower cover. It is not, however, limited thereto, and the cases 510' and 550' may be integrally formed into a single case.

For example, the cover member 140, the portion 131 of the head housing 130, the portion of the fifth pipe 175 and a portion of the flow path member 560 may be accommodated in an internal space of the first case 510'. For example, a portion of the first case 510', a portion of the flow path member 560, a portion of the head housing 130, and a portion of the cover member 140 may be accommodated in an internal space of the second case 550'.

The first case 510' may include a first mounting projection 511' and a first mounting groove 512'. For example, the first mounting projection 511' may perform substantially the same function as the aforementioned first mounting projection 511. For example, the first mounting groove 512' may perform substantially the same function as the aforementioned first mounting groove 512. The first mounting projection 511' may protrude outward of the first case 510' from the outer surface of the first case 510'. The first mounting projection 511' may protrude from the outer surface of the first case 510' to form the first mounting groove 512'. The first mounting groove 512' may be a sunken portion as compared to the first mounting projection 511'. The first mounting projection 511' may be spirally formed along the circumference of the first case 510'. The first mounting groove 512' may be spirally formed along the circumference of the first case 510'.

The second case 550' may include a second mounting projection 551' and a second mounting groove 552'. For example, the second mounting projection 551' may perform substantially the same function as the aforementioned second mounting projection 551. The second mounting projection 551' may protrude inward of the second case 550' from the inner surface of the second case 550'. The second mounting projection 551' may protrude from the inner surface of the second case 550' to form the second mounting groove 552'. The second mounting groove 552' may be a sunken portion as compared to the second mounting projection 551'. The second mounting projection 551' may be spirally formed along the circumference of the second case 550'. The second mounting groove 552' may be spirally formed along the circumference of the second case 550'.

The first case 510' may be detachably coupled to the second case 550'. The first case 510' may be coupled to the second case 550' by rotation. By rotation of the first case 510' against the second case 550' in a first direction and/or rotation of the second case 550' against the first case 510' in a second direction opposite to the first direction, the first case 510' and the second case 550' may be coupled to or decoupled from each other. For example, with the mutual rotation of the first case 510' and the second case 550', the second mounting projection 551' of the second case 550' may be inserted to and/or mounted on the first mounting groove 512' of the first case 510'. For example, with the mutual rotation of the first case 510' and the second case 550', the first mounting projection 511' of the first case 510' may be inserted to and/or mounted in the second mounting groove 552' of the second case 550'. While the first case 510' is being coupled to the second case 550', the first mounting projection 511' may be accommodated in the second mounting groove 552', and the second mounting projection 551' may be accommodated in the first mounting groove 512'.As the first case 510' and the second case 550' are detachable from each other, it is possible to clean each of the first case 510', the second case 550', the flow path member 560 and the decoration cover 570 by separating the nozzle assembly 500 from the water supply assembly 100 after the use of a certain period of time.

The cases 510' and 550' may include a stopper 515'. The stopper 515' may prevent the first case 510' and the second case 550' from being excessively coupled to each other. The stopper 515' may restrict the first case 510' and the second case 550' from rotating beyond a predetermined range. As the cases 510' and 550' are equipped with the stopper 515', the first case 510' and the second case 550' may be prevented from being damaged/broken due to excessive rotation. For example, the stopper 515' may protrude from the outer surface of the first case 510'. For example, the stopper 515' may extend along the circumference of the first case 510'. Although the stopper 515' is shown as being formed on the first case 510', the disclosure is not limited thereto, and the stopper 515' may be formed on the first case 510' and/or the second case 550'.

The cases 510 and 550 may include guide projections 513' and 553'. The guide projections 513' and 553' may guide the flow path member 560 into a position to be placed. For example, the guide projections 513' and 553' may have at least a portion of the flow path member 560 placed between the first case 510' and the second case 550'. The guide projections 513' and 553' may come into contact with the flow path member 560. The guide projections 513' and 553' may be the position guide projections 513' and 553'. For example, as the flow path member 560 may be formed of a high thermal-conductive material, the cases 510' and 550' may come into contact with the flow path member 560 through the guide projections 513' and 553', thereby minimizing the contact area between the cases 510' and 550' and the flow path member 560. Accordingly, it may minimize the cases 510' and 550' receiving heat and getting hot even when hot water is passing the water supply path 500a.

For example, the first case 510' may include the first guide projection 513'. The first guide projection 513' may perform substantially the same function as the aforementioned first guide projection 513. The first guide projection 513' may contact the flow path member 560. The first guide projection 513' may protrude inward of the first case 510' from the inner surface of the first case 510'. For example, the first guide projection 513' may be provided in the plural. While the first case 510' and the second case 550' are being coupled together, the first guide projection 513' may be arranged above at least a portion of the flow path member 560. While the first case 510' and the second case 550' are being coupled together, the first guide projection 513' may be arranged above the body unit 561. The first guide projection 513' may hold a portion of the upper portion of the flow path member 560.

For example, the second case 550' may include the second guide projection 553'. The second guide projection 553' may perform substantially the same function as the aforementioned second guide projection 553. The second guide projection 553' may contact the flow path member 560. The second guide projection 553' may protrude inward of the second case 550' from the inner surface of the second case 550'. For example, the second guide projection 553' may extend along the circumference of the second case 550'. While the first case 510' and the second case 550' are being coupled together, the second guide projection 553' may be arranged under at least a portion of the flow path member 560. While the first case 510' and the second case 550' are being coupled together, the second guide projection 553' may be arranged under the edge part 565. The second guide projection 553' may hold a part of a lower portion of the flow path member 560.

The nozzle assembly 500 may include the decoration cover 570. The decoration cover 570 may form at least a portion of the exterior of the nozzle assembly 500. The decoration cover 570 may be arranged to be exposed to the outside. The decoration cover 570 may be arranged to cover the cases 510' and 550'. The decoration cover 570 may be arranged to enclose the cases 510' and 550'. The decoration cover 570 may be shaped substantially like a cylinder with a cavity.

The decoration cover 570 may be used as a design element of the nozzle assembly 500. The decoration cover 570 may have various colors and/or various materials. The decoration cover 570 having a color and a material desired by the user may be coupled to the cases 510' and 550'. As such, the nozzle assembly 500 may be implemented in various designs. The decoration cover 570 may improve an aesthetic impression of the nozzle assembly 500.

The decoration cover 570 may be detachably coupled to the outside of the cases 510' and 550'. The decoration cover 570 may be supported by the cases 510' and 550'. For example, the first case 510' may include a first supporting projection 514'. The first supporting projection 514' may be arranged to contact an upper end 571 of the decoration cover 570. The first supporting projection 514' may hold the upper end 571 of the decoration cover 570. For example, the second case 550' may include a second supporting projection 554'. The second supporting projection 554' may be arranged to contact a lower end 572 of the decoration cover 570. The second supporting projection 554' may hold the lower end 572 of the decoration cover 570. This may make the decoration cover 570 stably positioned between the first supporting projection 514' and the second supporting projection 554'.

The decoration cover 570 may be arranged to cover the cases 510' and 550'. When hot water is released, temperature of the flow path member 560 that forms the water supply path 500 may rise. With the rise in temperature of the flow path member 560, temperature of the cases 510' and 550' that accommodate the flow path member 560 may also rise. Heat of the flow path member 560 may transfer to the cases 510' and 550'. The decoration cover 570 may prevent the user from being hurt due to the temperature rise of the cases 510' and 550' by covering the cases 510' and 550'. The decoration cover 570 may prevent the user from getting into burning accidents. For example, the decoration cover 570 may include a material with good heat resistance.

The decoration cover 570 may also be called a decoration member, a decoration frame, a decoration ring, etc.

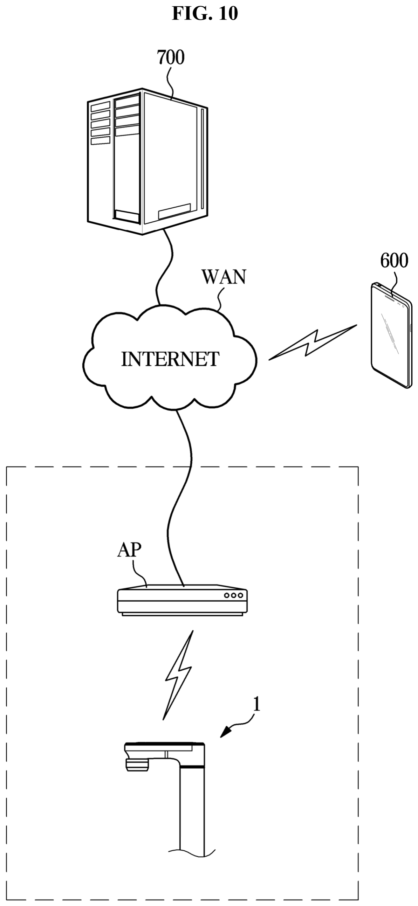

FIG. 10 illustrates a network of a water purifier, according to an embodiment of the disclosure.

Referring to FIG. 10, the water purifier 1 may communicate with another home appliance (not shown), a user device user device 600 or a server 700.

The other home appliance may be at least one of various kinds of home appliances. For example, the other home appliance may include at least one of a refrigerator, a dish washer, an electric range, an electric oven, an air conditioner, a washing machine, a dryer, or a microwave oven, but is not limited thereto, and may include various types of home appliances such as a cleaning robot, a vacuum cleaner, a television, etc., not shown in the drawing. The aforementioned home appliances are merely an example.

The server 700 may include a communication module for communicating with another server, the water purifier 1 or the user device 600, at least one processor for processing data received from the other server, the water purifier 1 or the user device 600, and at least one memory for storing a program for processing data or storing the processed data. The server 700 may be implemented with various computing devices such as a workstation, a cloud, a data drive, a data station, etc. The server 700 may be implemented with one or more servers physically or logically classified based on function, sub-configuration of the function or data, and may transmit or receive data through inter-server communication and process the data.

The server 700 may perform functions, such as managing a user account, registering the water purifier 1 by connecting the water purifier 1 to the user account, and managing or controlling the registered water purifier 1. For example, the user may access the server 700 through the user device 600 to create a user account. The user account may be identified by an identity (ID) and a password created by the user. The server 700 may register the water purifier 1 with the user account according to a set procedure. For example, the server 700 may connect identification information (e.g., a serial number, a media access control (MAC) address, etc.) of the water purifier 1 to the user account to register, manage and control the water purifier 1.

The user device 600 may include a communication module for communicating with the water purifier 1 or the server 700, a user interface device for receiving user inputs or outputting information for the user, at least one processor for controlling operations of the use equipment 600, and at least one memory for storing a program for controlling the operations of the user device 600.

The user device 600 may be carried by the user or placed at the user's home or office. The user device 600 may include a personal computer, a terminal, a portable telephone, a smart phone, a handheld device, a wearable device, etc., without being limited thereto.

In the memory of the user device 600, a program for controlling the water purifier 1, i.e., an application, may be stored. The application may be sold in a state of being installed in the user device 600, or may be downloaded and installed from an external server.

The user may access the server 700 and create a user account by running the application installed in the user device 600, and sign up the water purifier 1 by communicating with the server 700 based on the login user account.

For example, when the water purifier 1 is operated to access the server 700 according to a procedure guided in the application installed in the user device 600, the server 700 may register the water purifier 1 with the user account by registering the identification information (e.g., a serial number or a MAC address) of the water purifier 1 with the user account.

The user may use the application installed in the user device 600 to control the water purifier 1. For example, when the user logs in on the user account with the application installed in the user device 600, the water purifier 1 registered with the user account may appear thereon, and when a control command is input for the water purifier 1, the control command may be forwarded to the water purifier 1 through the server 700.

A network may include both a wired network and a wireless network. The wired network may include a cable network or a telephone network, and the wireless network may include any network that transmits or receives signals in radio waves. The wired network and the wireless network may be connected to each other.

The network may include a wide area network (WAN) such as the Internet, a local area network (LAN) formed around an access point (AP), and a short-range wireless network without an AP. The short-range wireless network may include bluetooth (IEEE 802.15.1), Zigbee (IEEE 802.15.4), wireless fidelity (Wi-Fi) direct, near field communication (NFC), Z-wave, etc., without being limited thereto.

The AP may connect the water purifier 1 or the user device 600 to the WAN connected to the server 700. The water purifier 1 or the user device 600 may be connected to the server 700 through the WAN.

The AP may use wireless communication such as Wi-Fi (IEEE 802.11), Bluetooth (IEEE 802.15.1), Zigbee (IEEE 802.15.4), etc., to communicate with the water purifier 1 or the user device 600, and use wired communication to access the WAN, but is not limited thereto.

In various embodiments, the water purifier 1 may be directly connected to the user device 600 or the server 700 without passing through the AP.

The water purifier 1 may be connected to the user device 600 or the server 700 over a long-range wireless network or a short-range wireless network.

For example, the water purifier 1 may be connected to the user device 600 over a short wireless network (e.g., Wi-Fi direct).

In another example, the water purifier 1 may use the long-range wireless network (e.g., a cellular communication module) to be connected to the user device 600 or the server 700 through the WAN.

In another example, the water purifier 1 may connect to the WAN by using wired communication, and connect to the user device 600 or the server 700 through the WAN.

When the water purifier 1 is able to access the WAN through the wired communication, the home appliance 10 may also operate as an AP. Accordingly, the water purifier 1 may connect another home appliance to the WAN to which the server 700 is connected. Furthermore, the other home appliance may connect the water purifier 1 to the WAN to which the server 700 is connected.

The water purifier 1 may transmit information about the operation or status to another home appliance, the user device 600 or the server 700 over the network. For example, on receiving a request from the server 700 or when a particular event occurs in the water purifier 1, the water purifier 1 may transmit the information about the operation or the status to the other home appliance, the user device 600 or the server 700 periodically or in real time. On receiving the information about the operation or status from the water purifier 1, the server 700 may update information about the operation or status that has been stored, and transmit the updated information about the operation and status of the water purifier 1 to the user device 600 over the network. The updating of the information may include various operations to change the existing information such as adding new information to the existing information, replacing the existing information with new information, etc.

The water purifier 1 may obtain various information from another home appliance, the user device 600 or the server 700, and provide the obtained information to the user. For example, the water purifier 1 may obtain information about a function of the water purifier 1 (e.g., cold water, hot water, purified water, etc.) or various environmental information (e.g., weather, temperature, humidity, etc.), and output the obtained information through the user interface device.

The water purifier 1 may operate according to a control command received from another home appliance, the user equipment 600 or the server 700. For example, when the water purifier 1 has won prior approval of the user to operate according to a control command of the server 700 even without having a user input, the water purifier 1 may operate according to the control command received from the server 700. The control command received from the server 700 may include a control command input by the user through the user device 600, a control command based on a preset condition or the like, without being limited thereto.

The user equipment 600 may transmit information about the user to the water purifier 1 or the server 700 through the communication module. For example, the user device 600 may transmit information about a location of the user, a physical condition of the user, a preference of the user, a schedule of the user, etc., to the server 700. The user device 600 may transmit the information about the user to the server 700 according to prior approval of the user.

The water purifier 1, the user equipment 600 or the server 700 may determine a control command by using a technology such as artificial intelligence (AI). For example, the server 700 may receive information about the operation or status of the water purifier 1 or information about the user of the user equipment 600, process the information by using a technology such as AI, and transmit a result of the processing or a control command to the water purifier 1 or the user equipment 600 based on the result of the processing.

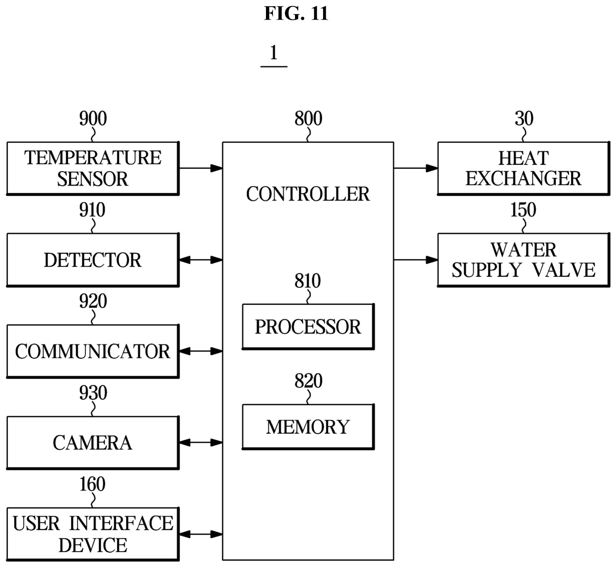

FIG. 11 illustrates a control block of a water purifier, according to an embodiment of the disclosure.

Referring to FIG. 11, the water purifier 1 may include a controller 800 to perform overall control.

The controller 800 may be electrically connected to a temperature sensor 900, a detector 910, a communicator 920, a camera 930, a user interface device 160, a heat exchanger 30, the water supply valve 150, etc.

The temperature sensor 900 may detect temperature of hot water.

The temperature sensor 900 may detect the temperature of hot water heated by and coming out of a heater of the heat exchanger 30. For example, the temperature sensor 50 may be provided as an existing type of temperature sensor, and may be arranged on a downstream side of the heater based on a water flowing direction.

The temperature sensor 900 may send the temperature information to the controller 800. The controller 800 may obtain the temperature of the hot water based on the temperature information.

The detector 910 may detect coupling of the nozzle assembly 500 to the water supply assembly 100.

The detector 910 may send the detection signal to the controller 800 in response to the coupling of the nozzle assembly 500 to the water supply assembly 100. For example, the detector 910 may send the controller 800 coupling detection information about whether the nozzle assembly 500 is coupled to the water supply assembly 100. The controller 800 may detect or recognize the coupling between the nozzle assembly 500 and the water supply assembly 100 based on the coupling detection information.

The detector 910 may include a hall sensor that detects a change in magnetic field due to a magnet arranged in the nozzle assembly 500 when the nozzle assembly 500 is coupled to the water supply assembly 100.

Furthermore, the detector 910 may include a short-range communication module capable of wirelessly communicating with the nozzle assembly 500. The short-range communication module may include a bluetooth communication module, a bluetooth low energy (BLE) communication module, a near field communication (NFC) module, a WLAN, e.g., Wi-Fi, communication module, a Zigbee communication module, an infrared data association (IrDA) communication module, a Wi-Fi direct (WFD) communication module, an ultrawideband (UWB) communication module, an Ant+ communication module, a microwave (uWave) communication module, etc., without being limited thereto.

The communicator 920 may communicate with an external device (e.g., the server 700, the user device 600 and/or a home appliance) wiredly and/or wirelessly.

The communicator 920 may include at least one of a short-range communication module or a long-range communication module.

The communicator 920 may transmit data to or receive data from an external device (e.g., the server 700, the user device 600 and/or a home appliance). For example, the communicator 920 may establish communication with and transmit or receive various data to or from the server, the user device and/or the home appliance.

For this, the communicator 920 may support establishment of a direct (e.g., wired) communication channel or a wireless communication channel between external devices, and communication through the established communication channel. According to an embodiment of the disclosure, the communication device 920 may include a wireless communication module (e.g., a cellular communication module, a short-range wireless communication module or a global navigation satellite system (GNSS) communication module) or a wired communication module (e.g., a local area network (LAN) communication module or a power-line communication module). A corresponding one of the communication modules may communicate with an external device over a first network (e.g., a short-range communication network such as bluetooth, wireless-fidelity (Wi-Fi) direct or infrared data association (IrDA)) or a second network (e.g., a remote communication network such as a legacy cellular network, a fifth generation (5G) network, a next generation communication network, the Internet, or a computer network (e.g., a LAN or wide area network (WAN)). These various types of communication modules may be integrated into a single component (e.g., a single chip) or implemented as a plurality of separate components (e.g., a plurality of chips).

The short-range communication module may include a bluetooth communication module, a BLE communication module, an NFC module, a WLAN, e.g., Wi-Fi, communication module, a Zigbee communication module, an IrDA communication module, a WFD communication module, an UWB communication module, an Ant+ communication module, a uWave communication module, etc., without being limited thereto.

The long-range communication module may include a communication module for performing various types of long-range communication and include a mobile communication module. The mobile communication module transmits and receives RF signals to and from at least one of a base station, an external terminal, or a server in a mobile communication network.

In an embodiment, the communicator 920 may communicate with an external device such as a server, a user device, another home appliance, etc., through a nearby AP. The AP may connect a local area network (LAN) connected to the water purifier or the user device to a wide area network (WAN) connected to the server. The water purifier or the user device may be connected to the server through the WAN.

The external device will be described as the server 700 and/or the user device 600 for convenience of explanation.

In an embodiment, the communicator 920 may receive user command from the external device 600 or 700. Specifically, the external device 600 or 700 may transmit a command or information to the water purifier 1, and the water purifier 1 may receive the command or information transmitted from the external device 600 or 700 through the communicator 920.

The camera 930 may obtain an image of an object from which to extract brewed coffee.

The camera 930 may recognize an identification code from the image of the object. The identification code may include at least one of an one dimensional bar code, a two dimensional (2D) QR code, a 2D matrix code, a color code, a three dimensional (3D) code and an image code.

The camera 930 may send the identification code of the object to the controller 800. The controller 800 may obtain information relating to a brewed coffee type corresponding to the identification code. The controller 800 may determine a coffee brewing recipe based on the information relating to the brewed coffee type. The controller 800 may store the determined coffee brewing recipe in the memory 820.

The user interface device 160 may include at least one input interface and at least one output interface.

The at least one input interface may convert sensory information received from the user into an electric signal.

The at least one input interface may include a power button, an operation button, a function select button (hot water, cold water, a water supply amount, etc.). The at least one input interface may include, for example, a tact switch, a push switch, a slide switch, a toggle switch, a micro switch, a touch switch, a touch pad, a touch screen, a jog dial and/or a microphone.

The at least one output interface may visually or acoustically provide information relating to an operation of the water purifier for the user.

For example, the at least one output interface may provide information relating to an operating time of the water purifier and water purifier settings for the user. The information relating to a water purifier operation may be output through a screen, an indicator, a voice, etc. The at least one output interface may include, for example, a liquid crystal display (LCD) panel, a light emitting diode (LED) panel, a speaker, etc.

The heat exchanger 30 may produce cold water by cooling the purified water and produce hot water by heating the purified water.

The water supply valve 150 may open or close the housing flow path 180.The controller 800 may include hardware such as a CPU, a micom or a memory, and software such as a control program. For example, the controller 800 may include at least one memory 820 that stores an algorithm for controlling operations of the components in the water purifier 1, and at least one processor 810 for performing the aforementioned operations using the data stored in the at least one memory 820. The memory 820 and the processor 810 may be implemented in separate chips. The processor 810 may include one, two or more processor chips or one, two or more processing cores. The memory 820 may include one, two or more memory chips or one, two or more memory blocks. Alternatively, the memory 820 and the processor 810 may be implemented in a single chip.

The controller 800 may control the heat exchanger 30 and the water supply valve 150.The controller 800 may control various types of components (e.g., the water supply valve, the heat exchanger, etc.) of the water purifier 1. The controller 800 may control the various components of the water purifier 1 to perform at least one operation regarding hot water, cold water and/or purified water according to a user input. For example, the controller 800 may control the heat exchanger 30 to supply hot water or control the heat exchanger 30 to supply cold water.

The controller 800 may control the communicator 920 to transmit, to the external device 600 or 700, a request signal that requests a coffee brewing recipe based on the coupling between the nozzle assembly 500 and the water supply assembly 100 being detected by the detector 910, and control the water supply assembly 100 and the heat exchanger 30 based on the coffee brewing recipe received from the external device 600 or 700 through the communicator 920.

Hence, the water purifier 1 in an embodiment may control a water supply operation according to the coffee brewing recipe desired by the user by coupling the nozzle assembly 500 to the water supply assembly 100, and thus, perform a brewed coffee extracting function without using a coffee brewing machine.

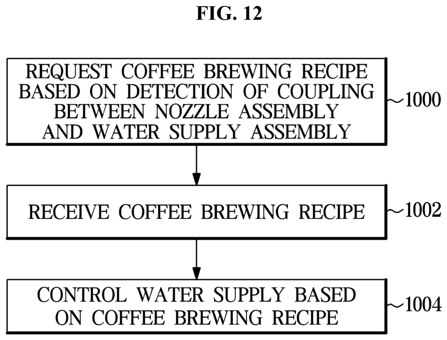

FIG. 12 illustrates an example of a flowchart of a method of controlling a water purifier, according to an embodiment of the disclosure.

Referring to FIG. 12, the controller 800 may request a coffee brewing recipe from the external device 600 or 700 through the communicator 920 based on the coupling of the nozzle assembly 500 to the water supply assembly 100, in 1000.

The controller 800 may detect the coupling between the nozzle assembly 500 and the water supply assembly 100 with the use of the detector 910.

When the user presses the nozzle assembly 500 from bottom to top toward the water supply assembly 100, the nozzle assembly 500 and the water output assembly 100 may be coupled to each other. In this case, the detector 910 may send the controller 800 a detection signal of when the nozzle assembly 500 is coupled to the water supply assembly 100. The controller 800 may detect the coupling between the nozzle assembly 500 and the water supply assembly 100 based on the detection signal of the detector 910.

When detecting the coupling between the nozzle assembly 500 and the water supply assembly 100, the controller 800 may transmit, to the external device 600 or 700, a request signal that requests a coffee brewing recipe through the communicator 920 in order to receive the coffee brewing recipe from the external device 600 or 700.

The controller 800 may receive the coffee brewing recipe from the external device 600 or 700 through the communicator 920, in 1002. The controller 800 may store the received coffee brewing recipe in the memory 820.

The controller 800 may control a water supply operation based on the coffee brewing recipe received from the external device 600 or 700 through the communicator 920, in 1004.

The controller 800 may control a water supply amount, a water supply temperature and a steep time for each extraction stage of the coffee brewing recipe received from the external device 600 or 700 by controlling the heat exchanger 30 and the water supply valve 150.

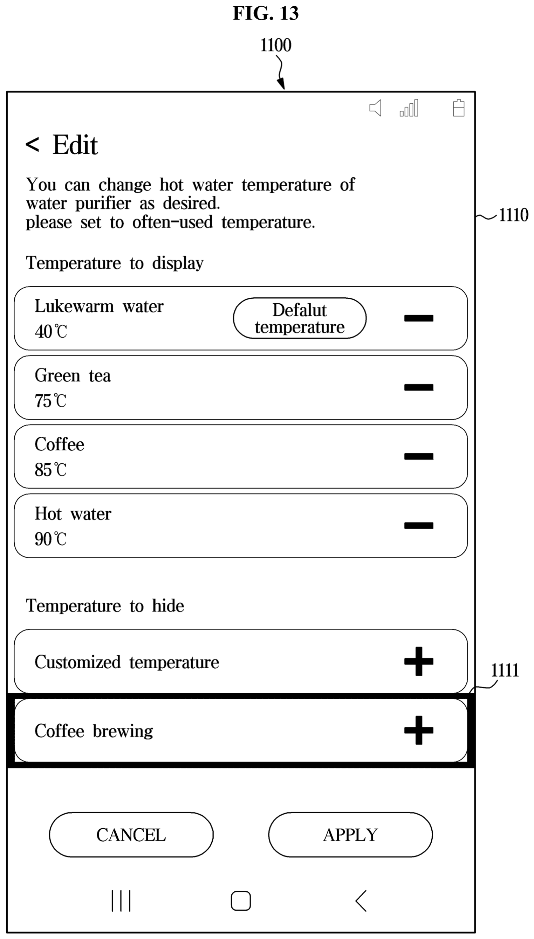

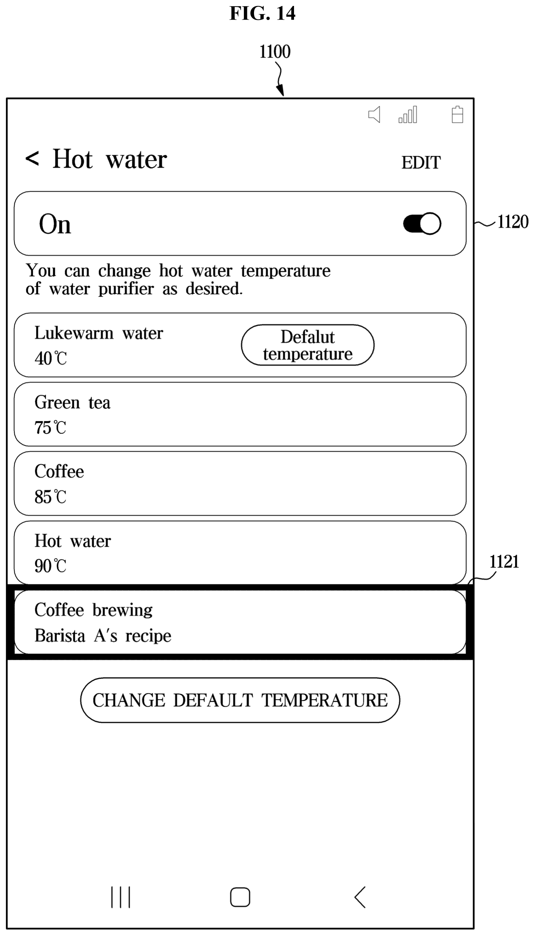

FIGS. 13 and 14 illustrate function activation UIs to activate a brewed coffee extracting function of a water purifier, according to an embodiment of the disclosure.

In FIG. 13, shown is a screen 1100 of an application connected to the server 700 in communication with the water purifier 1 as the application installed in the user device 600 is executed.

Referring to FIG. 13, a first function activation UI 1110 to activate a brewed coffee extracting function of the water purifier 1 is shown on the application screen 1100.

The user may run the application installed in the user device 600 to access the server 700 in communication with the water purifier 1, and operate a first UI element 1111 related to "coffee brewing" located on the first function activation UI 1110 of the application screen 1100.

In FIG. 14, shown is a second function activation UI 1120 displayed on the application screen 1100 when the user selects the first UI element 1111 related to "coffee brewing" located on the first function activation UI 1110.

Referring to FIG. 14, a second function activation UI 1120 may be displayed on the application screen 1100 when the user selects the first UI element 1111 of the first function activation UI 1110.

The user may operate a second UI element 1121 related to "coffee brewing (barista A's recipe)" located on the second function activation UI 1120.

When the user selects the second UI element 1121 of the second function activation UI 1120, the server 700 may activate a brewed coffee extracting function of the water purifier 1. Accordingly, the user is able to use the brewed coffee extracting function of the water purifier 1.

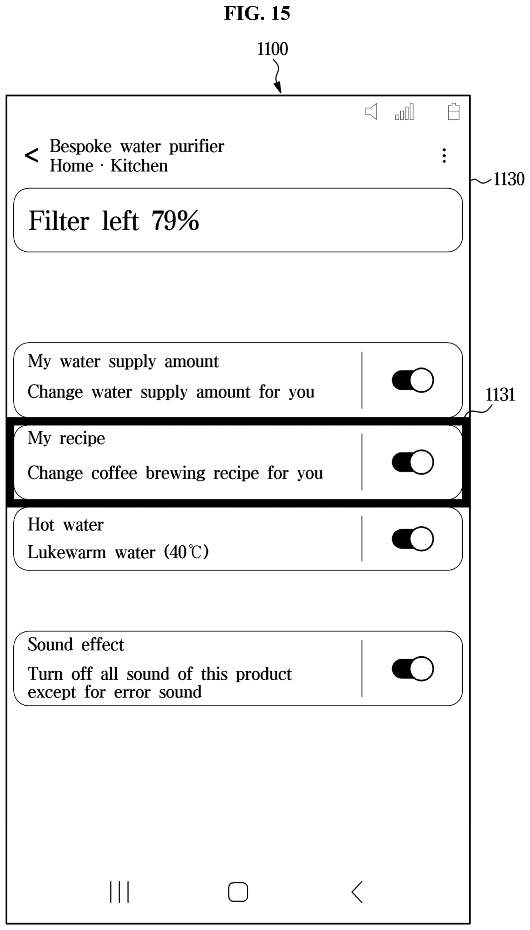

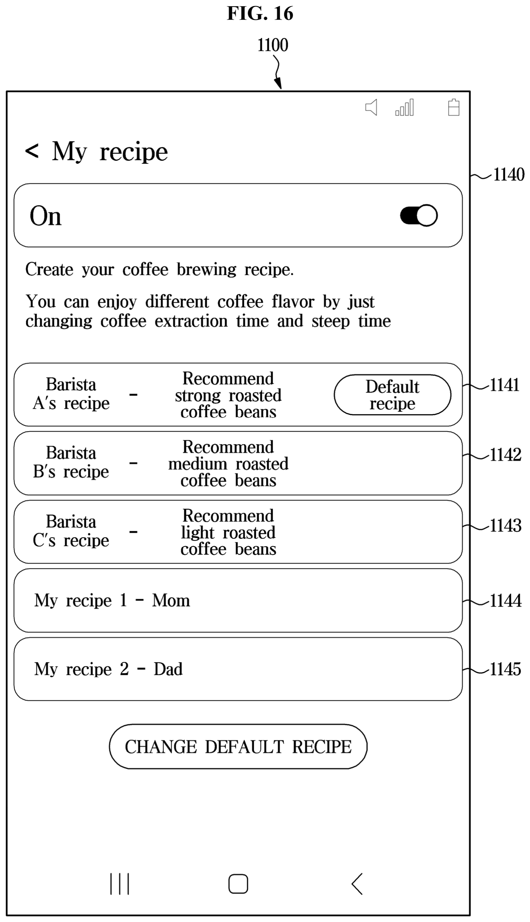

FIGS. 15 and 16 illustrate recipe selection UIs to select a coffee brewing recipe of a water purifier, according to an embodiment of the disclosure.

In FIG. 15, shown is a first recipe selection UI 1130 to receive a selection of a coffee brewing recipe of the water purifier 1 on the application screen 1100.

Referring to FIG. 15, the user may select a third UI recipe 1131 related to "my recipe" located on the first recipe selection UI 1130.

In FIG. 16, shown is a second recipe selection UI 1140 displayed on the application screen 1100 when the user selects the third UI element 1131 related to "my recipe" located on the first recipe selection UI 1130.

Referring to FIG. 16, the second recipe selection UI 1140 may include a fourth UI element 1141, a fifth UI element 1142, a sixth UI element 1143, a seventh UI element 1144 and an eighth UI element 1145.

The fourth UI element 1141 may be related to "barista A's recipe". For example, the barista A's recipe may be a famous Barista A's coffee brewing recipe. The barista A's recipe may be a coffee brewing recipe suitable for strong roasted coffee beans. The strong roasted coffee beans refer to coffee beans roasted strongly.

The fifth UI element 1142 may be related to "barista B's recipe". For example, the barista B's recipe may be a famous Barista B's coffee brewing recipe. The barista B's recipe may be a coffee brewing recipe suitable for medium roasted coffee beans. The medium roasted coffee beans may refer to coffee beans roasted weaker than the strong roasted coffee beans.

The sixth UI element 1143 may be related to "barista C's recipe". For example, the barista C's recipe may be a famous Barista C's coffee brewing recipe. The barista C's recipe may be a coffee brewing recipe suitable for light roasted coffee beans. The light roasted coffee beans may refer to coffee beans roasted weaker than the medium roasted coffee beans.

The seventh UI element 1144 may be related to "my recipe 1 - mom" . For example, it may be my recipe 1 - mom's coffee brewing recipe.

The eighth UI element 1145 may be related to "my recipe 2 - dad" . For example, it may be my recipe 2 - dad's coffee brewing recipe.

The user may select one of the fourth, fifth, sixth, seventh and eighth UI elements 1141, 1142, 1143, 1144 and 1145 located on the second recipe selection UI 1140 so that a coffee brewing recipe corresponding to the selected UI element may be selected as a default recipe of the water purifier 1.

The server 700 may store a plurality of coffee brewing recipes registered or selectable by the user, and store a coffee brewing recipe selected by the user as a default recipe of the water purifier 1. For example, the server 700 may store coffee brewing recipes such as "barista A's recipe", "barista B's recipe", "barista C's recipe", "my recipe 1 - mom", "my recipe 1 - dad", etc., and store "barista A's recipe" as a default recipe of the water purifier 1.

The user may set up and store a coffee brewing recipe for each person through an application in the user device 600. A water supply amount, water supply temperature, steep time, etc., for each water supply stage of each individual's coffee brewing recipe may be adjusted. For example, the application may display a recipe creation UI for customizing a coffee brewing recipe, and register a customized coffee brewing recipe through the recipe creation UI.

The user may select particular coffee beans through the application of the user device 600 and register the corresponding coffee brewing recipe.

The user may register a coffee brewing recipe optimized for particular coffee beans or a drip bag by scanning an identification code of the particular coffee beans or the drip bag through the application of the user device 600.

The user may send the coffee brewing recipe selected by the user to the server 700 through the application in the user device 600.

The server 700 may transmit the coffee brewing recipe selected by the user to the water purifier 1. Accordingly, the water purifier 1 may receive the coffee brewing recipe from the server 700, and perform a water supply operation according to the coffee brewing recipe based on the received coffee brewing recipe.

Furthermore, on receiving, from the water purifier 1, a request signal to request a coffee brewing recipe, the server 700 may transmit a coffee brewing recipe stored as the default recipe of the water purifier 1 to the water purifier 1. Accordingly, the water purifier 1 may receive the coffee brewing recipe from the server 700, and perform a water supply operation according to the coffee brewing recipe based on the received coffee brewing recipe.

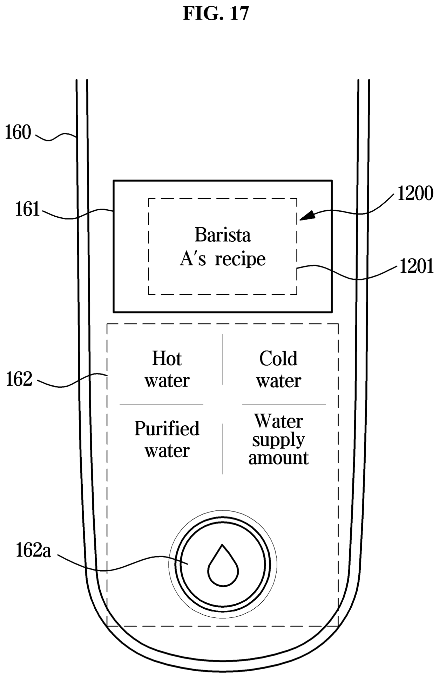

FIGS. 17 to 20 illustrate a water supply operation UI to guide a water supply operation based on a coffee brewing recipe received from an external device on a user interface device of a water purifier, according to an embodiment of the disclosure.

In FIG. 17, shown is the user interface device 160 of the water purifier 1.

The user interface device 160 may include the output interface 161 and the input interface 162. The input interface 162 may include many operation buttons 162 for hot water, cold water, purified water, a water supply amount, etc., and a water supply button 162a.

Referring to FIG. 17, on receiving the coffee brewing recipe from the external device 600 or 700 through the communicator 920, the controller 800 may control the heat exchanger 30 and the water supply assembly 100 based on the received coffee brewing recipe to control a water supply operation according to the received coffee brewing recipe.

With this, on receiving the coffee brewing recipe from the external device 600 or 700 through the communicator 920, the controller 800 may display a water supply operation UI 1200 to guide a water supply operation according to the received coffee brewing recipe on the output interface 161 of the user interface device 160.

For example, when the coffee brewing recipe received by the controller 800 from the external device 600 or 700 through the communicator 920 corresponds to barista A's recipe, the controller 800 may display "barista A's recipe" 1201 on the output interface 161, which is a name of a coffee brewing recipe to be materialized.

In general, a coffee brewing recipe may include several extraction stages such as prewetting, first extraction, second extraction, third extraction, etc., to extract brewed coffee, and a water supply amount, a water supply temperature, and a steep time corresponding to each extraction stage may be set in the coffee brewing recipe.

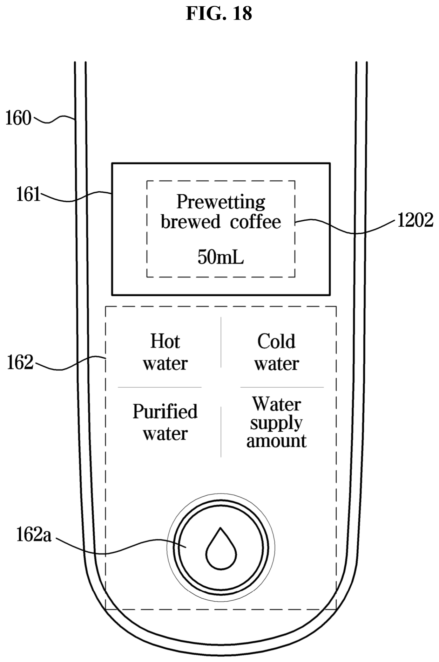

Referring to FIG. 18, the controller 800 may display "prewetting brewed coffee" 1202 related to a water supply operation according to the prewetting on the output interface 161 when performing a water supply operation according to the prewetting in the barista A's recipe.

The prewetting is a first stage of brewed coffee extraction. For prewetting, water is supplied uniformly and densely. The water is supplied thinly and thoroughly. When the water is poured first onto ground coffee, the water spreads evenly and spreads uniformly throughout the ground coffee in prewetting. As the coffee particles absorb the water, the water-soluble components of the coffee are sufficiently dissolved, making it easy to do the extraction. The prewetting serves to remove carbon dioxide gas and air contained in the coffee. When the coffee is properly prewetted and swollen, it may bring out a special flavor and aroma.

A steep time for the prewetting is, for example, about 30 seconds. The steep time corresponds to a time taken from when the ground coffee is swollen with the water supplied first to when it is settled again after a certain period of time.

The controller 800 may control the heat exchanger 30 and the water supply valve 150 of the water supply assembly 100 according to the water supply temperature, water supply amount and steep time of the prewetting in the barista A's recipe.

For example, for the prewetting, the water is supplied at the water supply temperature of 90 degrees in the water supply amount of 50 ml and 0.4 liter per minute (LPM) and the steep time may be 30 seconds.

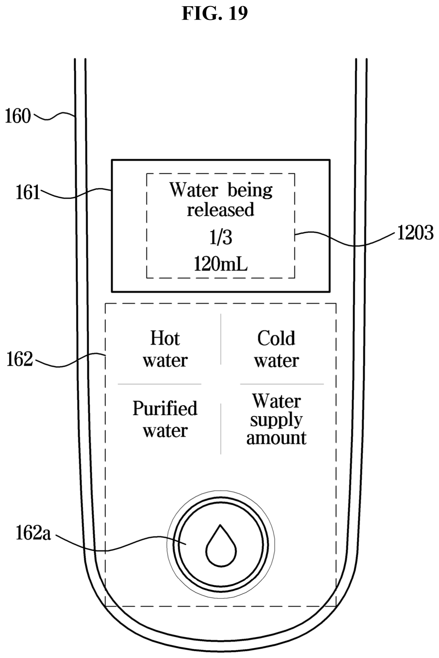

Referring to FIG. 19, when a water supply operation according to the first extraction in the barista A's recipe is performed, "water is being supplied 1/3" 1203 related to the water supply operation according to the first extraction may be displayed on the output interface 161.

The controller 800 may control the heat exchanger 30 and the water supply valve 150 of the water supply assembly 100 according to the water supply temperature, water supply amount and steep time of the first extraction in the barista A's recipe.

For example, for the first extraction, the water is supplied at the water supply temperature of 92 degrees in the water supply amount of 120 ml / 0.35 LPM, and the steep time may be 60 seconds.

The controller 800 may perform a water supply operation according to the second extraction after the water supply operation according to the first extraction.

For example, for the second extraction, the water is supplied at the water supply temperature of 91 degrees in the water supply amount of 130 ml / 0.4 LPM, and the steep time may be 60 seconds.

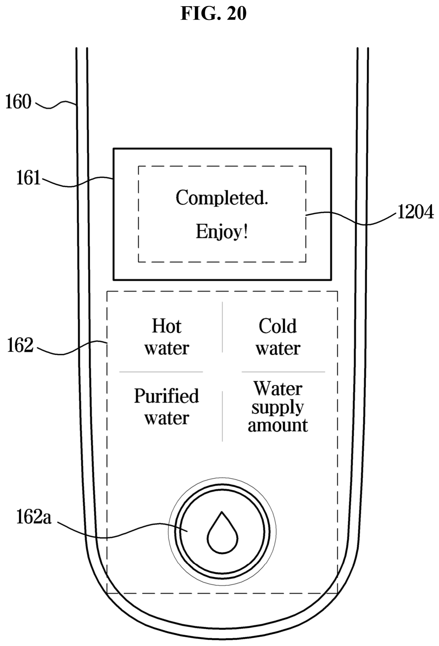

Referring to FIG. 20, when the second extraction is completed, the controller 800 may display "Completed. Enjoy your coffee" 1204 related to the completion of brewed coffee extraction may be displayed on the output interface 161.

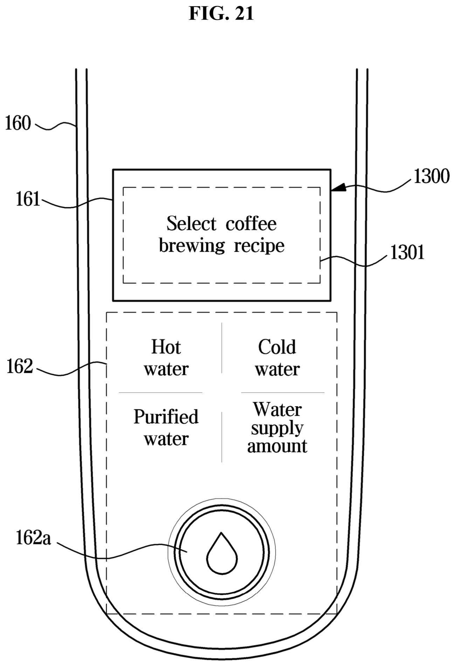

FIGS. 21 to 24 illustrate recipe selection UIs to receive a selection of coffee brewing recipe on a user interface of a water purifier, according to an embodiment of the disclosure.

In FIG. 21, shown is a recipe selection UI 1300 to receive a selection of a coffee brewing recipe from the user on the output interface 161 of the user interface device 160.

The controller 800 may display the recipe selection UI 1300 on the output interface 161 based on the coupling between the nozzle assembly 500 and the water supply assembly 100 detected by the detector 910.

For example, the controller 800 may display "select a coffee brewing recipe" 1301 related to a request for selecting a coffee brewing recipe on the output interface 161.

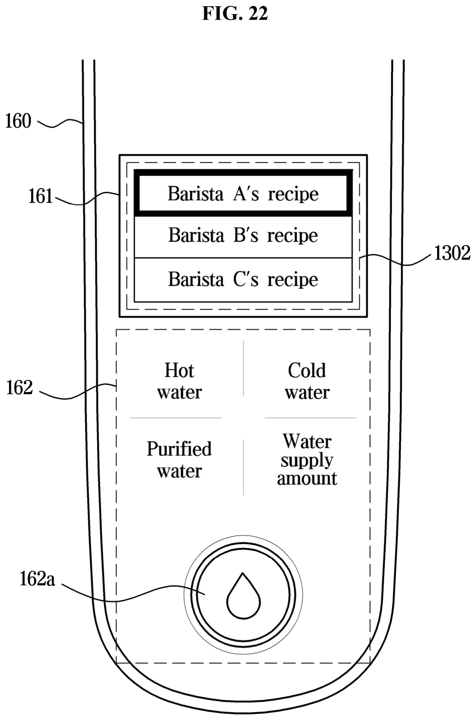

In FIG. 22, shown is a recipe list 1302 of the recipe selection UI 1300.

The output interface 161 may receive a touch input from the user.

When the user touches "select a coffee brewing recipe" 1301 on the recipe selection UI 1300, the recipe list 1302 related to a list of coffee brewing recipes stored in the memory 820 may be displayed on the output interface 161. The recipe list 1302 may include the barista A's recipe, the barista B's recipe, the barista C's recipe, etc. For example, the user may select the barista A's recipe by touching the barista A's recipe among the recipe list 1302.

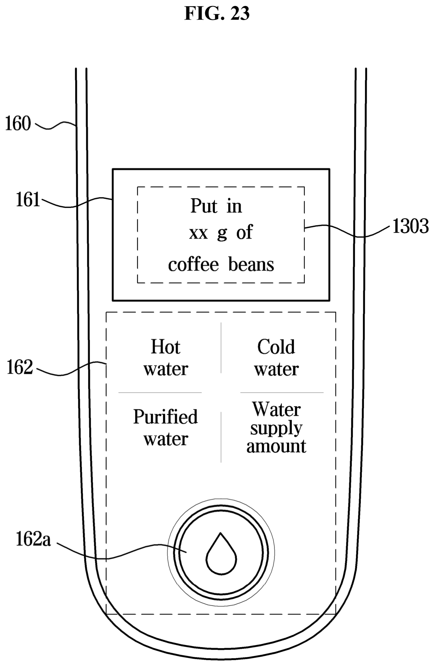

In FIG. 23, shown is "put in xx g of coffee beans" 1303 of the recipe selection UI 1300.

When the user selects one recipe from among the recipe list 1302, "put in xx g of coffee beans" related to a request for providing a suitable amount of coffee beans for the dripper D may be displayed on the output interface 161.

When the user puts xx g of coffee beans into the dripper D and then operates the water supply button 162a, the controller 800 may extract brewed coffee according to the barista A's recipe by controlling the heat exchanger 30 and the water supply valve 150 based on the barista A's recipe selected through the recipe selection UI 1300.

In the meantime, the controller 800 may control the heat exchanger 30 and the water supply valve 150 based on one of a coffee brewing recipe received from the external device 600 or 700 or a coffee brewing recipe selected through the recipe selection UI 1300 displayed on the user interface device 160. Specifically, the controller 800 may control, based on the coffee brewing recipe received from the external device 600 or 700, a water supply operation according to the received coffee brewing recipe, or control, based on the coffee brewing recipe selected through the recipe selection UI 1300 displayed on the user interface device 160, a water supply operation according to the selected coffee brewing recipe.

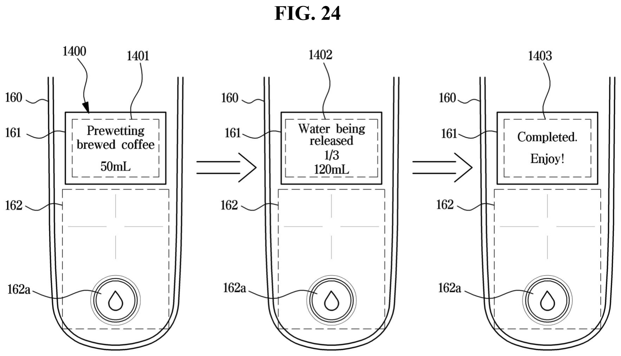

FIG. 24 illustrates a water supply operation UI to guide a water supply operation based on a coffee brewing recipe selected on a user interface of a water purifier, according to an embodiment of the disclosure.

Referring to FIG. 24, the controller 800 may perform prewetting and N-th extraction in the barista A's recipe selected through the recipe selection UI 1300.

For example, in the prewetting stage of the barista A's recipe, the water may be supplied at the water supply temperature of 90 degrees in the water supply amount of 50 ml / 0.4 LPM and the steep time may be 30 seconds. In the first extraction stage, the water may be supplied at the water supply temperature of 92 degrees in the water supply amount of 120 ml / 0.35 LPM and the steep time may be 60 seconds. In the second extraction stage, the water may be supplied at the water supply temperature of 91 degrees in the water supply amount of 130 ml / 0.4 LPM and the steep time may be 60 seconds.

With this, for each extraction stage of the barista A's recipe, a prewetting operation 1401, an N-th extraction operation 1402 and extraction completion 1403 may be guided to the user through the water supply operation UI 1400, to notify a water supply operation according to the brewed coffee of the barista A's recipe.

The user may customize a desired coffee brewing recipe through the user interface device 160. A water supply amount, water supply temperature, steep time, etc., for each extraction stage of the desired coffee brewing recipe may be set.

For this, the controller 800 may display a recipe creation UI for customizing a coffee brewing recipe through the user interface device 160. The controller 800 may store the coffee brewing recipe customized through the recipe creation UI in the memory 820.

The user may register a coffee brewing recipe optimized for particular coffee beans or a drip bag by scanning an identification code of the particular coffee beans or the drip bag through the user interface device 160.

The controller 800 may obtain information about a brewed coffee type corresponding to an identification code recognized from an image obtained through the camera 930 that obtains the image of an object. The controller 800 may determine a coffee brewing recipe based on the information relating to the brewed coffee type. The controller 800 may store the determined coffee brewing recipe in the memory 820.

When the water supply operation according to a coffee brewing recipe is performed, coffee particles may bounce due to the water suppled onto the coffee beans, and thus contaminate the nozzle assembly 500 coupled to the water supply assembly 100.

Hence, the number of times of coupling between the nozzle assembly 500 and the water supply assembly 100 may be counted, and when the counted number reaches a preset number, a cleaning cycle of the nozzle assembly 500 may be notified or the nozzle assembly 550 may be washed.

For example, the controller 800 may count the number of times of coupling between the nozzle assembly 500 and the water supply assembly 100, and when the number of coupling times reaches the preset number, the controller 800 may notify the user of the cleaning cycle through the user interface device 160. Accordingly, the user is able to wash the nozzle assembly 500 on his/her own.

Furthermore, the controller 800 may count the number of times of coupling between the nozzle assembly 500 and the water supply assembly 100, and when the number of coupling times reaches the preset number, the controller 800 may control the water supply valve 150 to wash the nozzle assembly 500. Accordingly, the water may be supplied to the nozzle assembly 500 to be washed.

As described above, the water purifier 1 according to an embodiment of the disclosure may include the nozzle assembly 500 coupled to the water supply assembly 100, and may perform a brewed coffee extracting function by using the nozzle assembly 500.

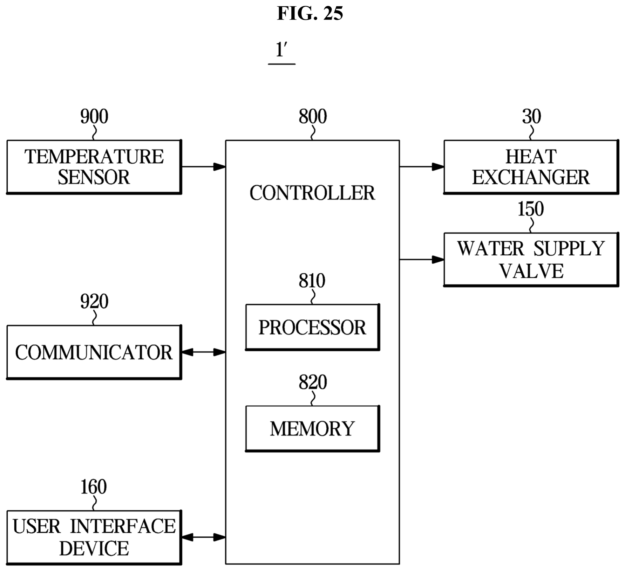

FIG. 25 is a control block diagram of a water purifier, according to another embodiment of the disclosure.

Referring to FIG. 25, a water purifier 1' may include the controller 800, the temperature sensor 900, the communicator 920, the user interface device 160, the heat exchanger 30, the water supply valve 150, etc.

The controller 800 may be electrically connected to the temperature sensor 900, the communicator 920, the user interface device 160, the heat exchanger 30, the water supply valve 150, etc.

The temperature sensor 900 may detect temperature of hot water.

The temperature sensor 900 may send the temperature information to the controller 800. The controller 800 may obtain the temperature of the hot water based on the temperature information.

The communicator 920 may communicate with an external device (e.g., the server 700, the user device 600 and/or a home appliance) wiredly and/or wirelessly.

The user interface device 160 may include at least one input interface and at least one output interface.

The heat exchanger 30 may produce cold water by cooling the purified water and produce hot water by heating the purified water.

The water supply valve 150 may open or close the housing flow path 180.

The controller 800 may control the heat exchanger 30 and the water supply valve 150.

The controller 800 may control the heat exchanger 30 and the water supply valve 150 of the water supply assembly 100 based on one of the coffee brewing recipe received from the external device 600 or 700 through the communicator 920 or the coffee brewing recipe selected by the user through the user interface device 160.

Hence, the water purifier 1' according to another embodiment may control a water supply operation according to the coffee brewing recipe desired by the user by coupling the nozzle assembly 500 to the water supply assembly 100, and thus, perform a brewed coffee extracting function without using a coffee brewing machine.

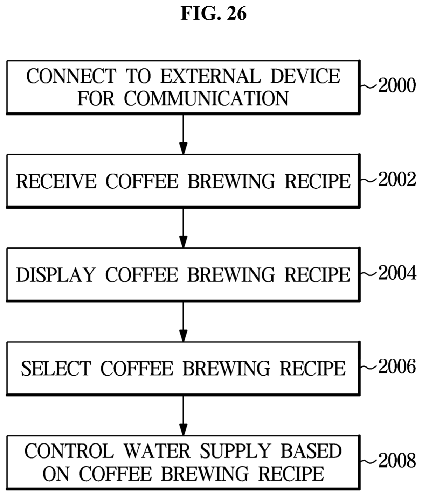

FIG. 26 illustrates an example of a flowchart of a method of controlling a water purifier, according to another embodiment of the disclosure.

Referring to FIG. 26, the controller 800 may be connected for communication with the external device 600 or 700 through the communicator 920, in 2000. With this, the water purifier 1' in which the nozzle assembly 500 is coupled to the water supply assembly 100 may transmit data to the external device 600 or 700 or receive data from the external device 600 or 700. When the nozzle assembly 500 is pressed by the user against the water supply assembly 100, the nozzle assembly 500 and the water output assembly 100 may be coupled to each other.

The controller 800 may receive a coffee brewing recipe from the external device 600 or 700 communicatively connected thereto through the communicator 920, in 2002.

In an embodiment, the controller 800 may transmit a request signal that requests a coffee brewing recipe to the external device 600 or 700 through the communicator 920 based on communication with the external device 600 or 700 being connected. In response to the request signal, the external device 600 or 700 may transmit a coffee brewing recipe stored in the external device 600 or 700 to the water purifier 1'. The controller 800 may receive the coffee brewing recipe transmitted from the external device 600 or 700 through the communicator 920.

The controller 800 may display the received coffee brewing recipe on the user interface device 160, in 2004.

The controller 800 may receive a selection of a coffee brewing recipe desired by the user from among the displayed coffee brewing recipes, in 2006.

The controller 800 may control the water supply operation based on the selected coffee brewing recipe, in 2008.

In an embodiment, the controller 800 may control the heat exchanger 30 and the water supply valve 150 to control a water supply amount, steep time, etc., for each extraction stage in the selected coffee brewing recipe.

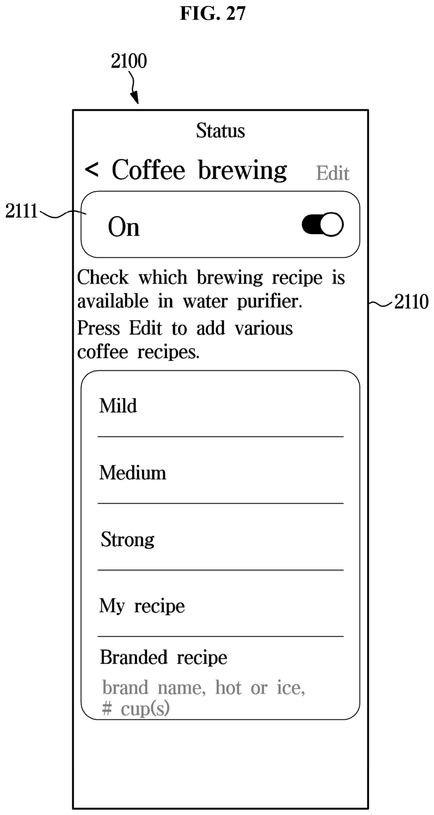

FIG. 27 illustrates a function activation UI to activate a brewed coffee extracting function of a water purifier, according to another embodiment of the disclosure.

In FIG. 27, shown is a screen 2100 of an application connected to the server 700 in communication with the water purifier 1' as the application installed in the user device 600 is executed.

A function activation UI 2110 to activate a brewed coffee extracting function of the water purifier 1' is shown on the application screen 2100.

The user may run the application installed in the user device 600 to access the server 700 in communication with the water purifier 1', and operate a function activation UI element 2111 related to "on", which is located on the function activation UI 2110 of the application screen 2100. The user may activate the brewed coffee extracting function by operating the function activation UI element 2111.

Recipe information for brewed coffee extraction may be displayed on the function activation UI 2110. The recipe information may include a coffee brewing recipe and coffee brewing recipe information registered in advance in the server 700. The recipe information may include basic recipe information including the default coffee brewing recipe, and additional recipe information created or selected by the user.

The basic recipe information may include "mild", "medium", "strong", etc. In an embodiment, "mild", "medium" and "strong" may be coffee brewing recipes in which an extraction amount and steep time may be set differently for each extraction stage.

The additional recipe information may include "my recipe", "branded recipe", etc.

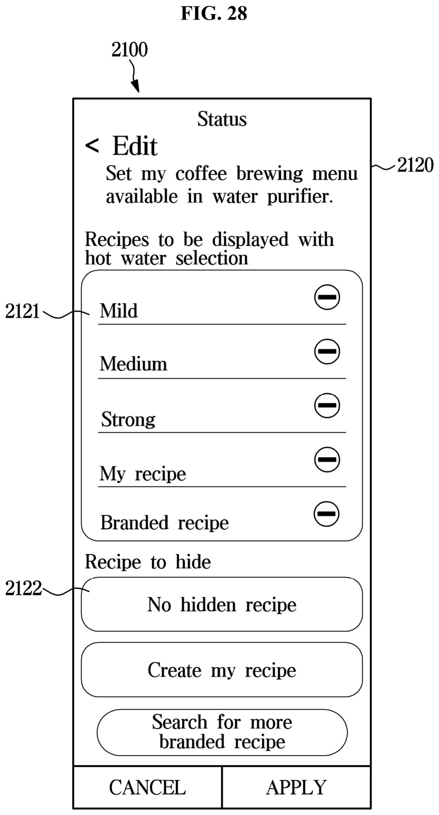

FIG. 28 illustrates a recipe setting UI to set a coffee brewing recipe of a water purifier, according to another embodiment of the disclosure.

Referring to FIG. 28, the application screen 2100 may include a recipe setting UI 2120 to set registered recipe information. When the user selects "edit" on the application screen 2100, the recipe setting UI 2120 may be displayed on the application screen 2100.

The recipe setting UI 2120 may include a registered recipe area 2121 and a hidden recipe area 2122.

The registered recipe area 2121 may display a registered or set coffee brewing recipe list available in the water purifier 1'. The registered recipe area 2121 may display coffee brewing recipes to be displayed with hot water selection. In an embodiment, the coffee brewing recipe list may be displayed on the user interface device 160 when the hot water button of the water purifier 1' is pressed.

In an embodiment, the coffee brewing recipe list displayed in the registered recipe area 2121 may include at least one of a first coffee brewing recipe related to "mild", a second coffee brewing recipe related to "medium", a third coffee brewing recipe related to "strong", a fourth coffee brewing recipe related to "my recipe" or a fifth coffee brewing recipe related to "branded recipe".

The hidden recipe area 2122 may display a hidden coffee brewing recipe list. In an embodiment, there may be no hidden coffee brewing recipe list.

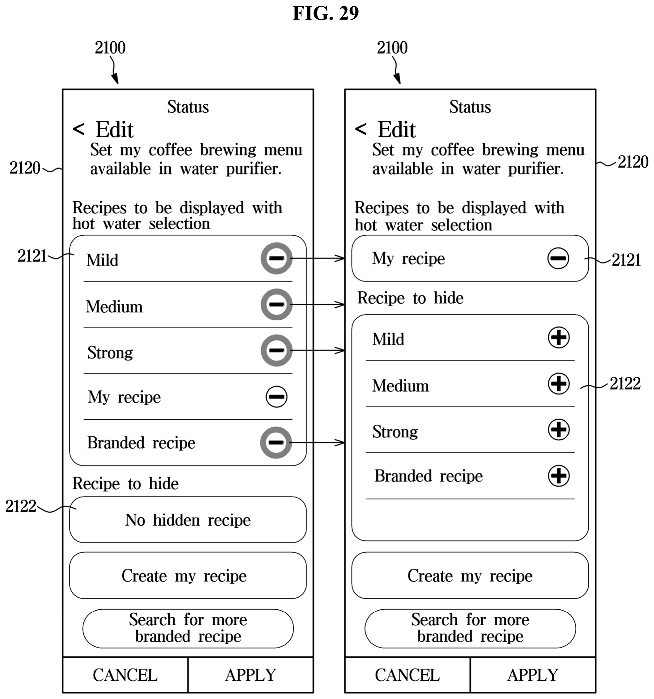

FIG. 29 illustrates a process of hiding some of coffee brewing recipes of a water purifier, according to another embodiment of the disclosure.

Referring to FIG. 29, some recipes among the coffee brewing recipe list in the registered recipe area 2121 may be hidden. The hidden recipe(s) may be displayed in the hidden recipe area 2122.

In an embodiment, from among the registered coffee brewing recipe list in the registered recipe area 2121, the first coffee brewing recipe related to "mild", the second coffee brewing recipe related to "medium", the third coffee brewing recipe related to "strong" and the fifth coffee brewing recipe related to "branded recipe" may be hidden.

The user may select a coffee brewing recipe he/she wants to hide from among the registered coffee brewing recipe list to hide the coffee brewing recipe from the registered recipe area 2121.

The first coffee brewing recipe related to "mild", the second coffee brewing recipe related to "medium", the third coffee brewing recipe related to "strong" and the fifth coffee brewing recipe related to "branded recipe" hidden from the registered recipe area 2121 may be displayed in the hidden recipe area 2122.

In the meantime, some recipes of the hidden coffee brewing recipe list in the hidden recipe area 2122 may be registered back in the registered recipe area 2121.

By selecting a coffee brewing recipe the user wants to register again from among the hidden coffee brewing recipe list, the user may delete the selected coffee brewing recipe from the hidden recipe area 2122 and display it back in the registered recipe area 2121.

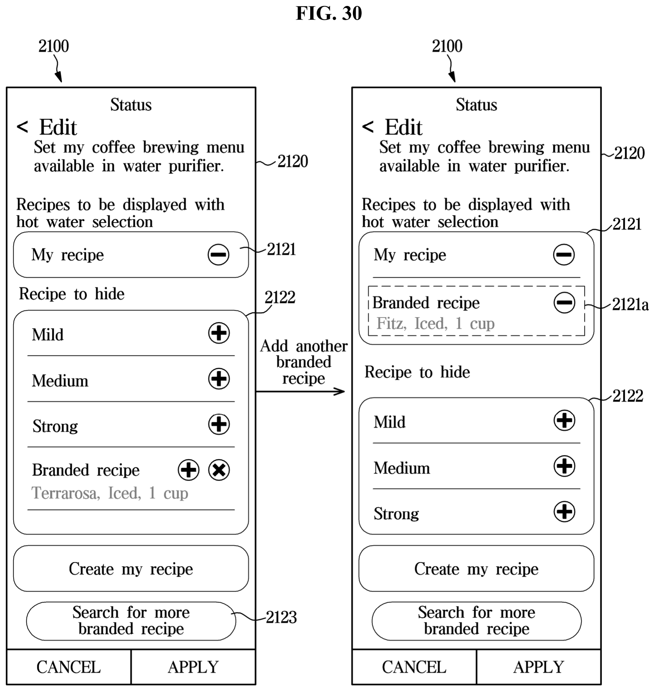

FIG. 30 illustrates a process of adding a branded recipe to coffee brewing recipes of a water purifier, according to another embodiment of the disclosure.

Referring to FIG. 30, a new branded recipe may be added to the coffee brewing recipe list in the registered recipe area 2121.

The recipe setting UI 2120 may include a recipe add UI element 2123 to search for and add a new branded recipe.

When the user selects a branded recipe he/she wants to add by selecting the recipe add UI element 2123, the branded recipe selected by the user may be additionally registered in the registered recipe area 2121.

In an embodiment, while only the fourth coffee brewing recipe related to "my recipe" is registered in the registered recipe area 2121, when the user selects a branded recipe of "Fritz, iced, 1 cup" through the recipe add UI element 2123, the branded recipe of "Fritz, iced, 1 cup" 2121a may be additionally registered in the registered recipe area 2121.

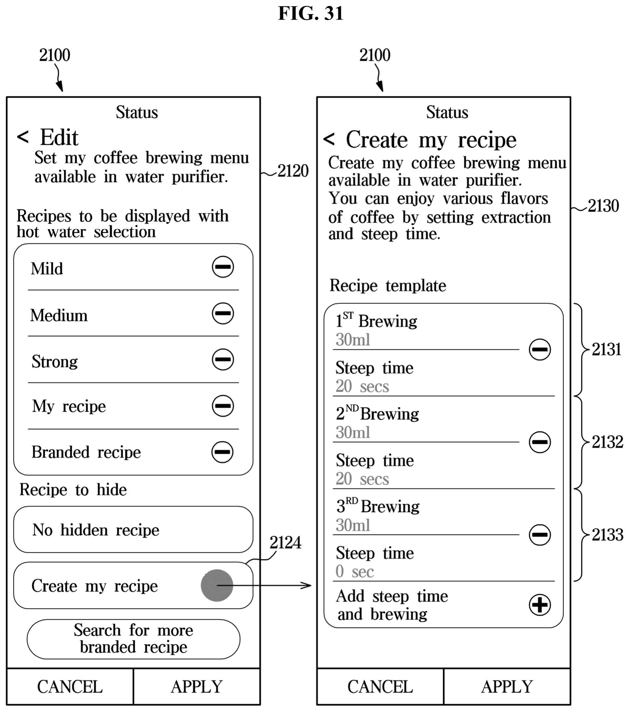

FIGS. 31 to 33 illustrate a process of creating 'my recipe' among coffee brewing recipes of the water purifier, according to another embodiment of the disclosure.

Referring to FIG. 31, 'my recipe' may be created to enjoy various flavors of coffee by setting an extraction amount and steep time desired by the user.

The recipe setting UI 2120 may include a recipe create UI element 2124 to create 'my recipe'.

When the user selects the recipe create UI element 2124, my-recipe setting UI 2130 to customize 'my recipe' may be displayed on the application screen 2100.

The my-recipe setting UI 2130 may include a first my-recipe setting UI element 2131, a second my-recipe setting UI element 2132, a third my-recipe setting UI element 2133, etc.

The first my-recipe setting UI element 2131 may be a UI element for first extraction of brewed coffee. The first my-recipe setting UI element 2131 may set first brewing and steep time for the first extraction.

The second my-recipe setting UI element 2132 may be a UI element for second extraction of brewed coffee. The second my-recipe setting UI element 2132 may set second brewing and steep time for the second extraction.

The third my-recipe setting UI element 2133 may be a UI element for third extraction of brewed coffee. The third my-recipe setting UI element 2133 may set third brewing and steep time for the third extraction.

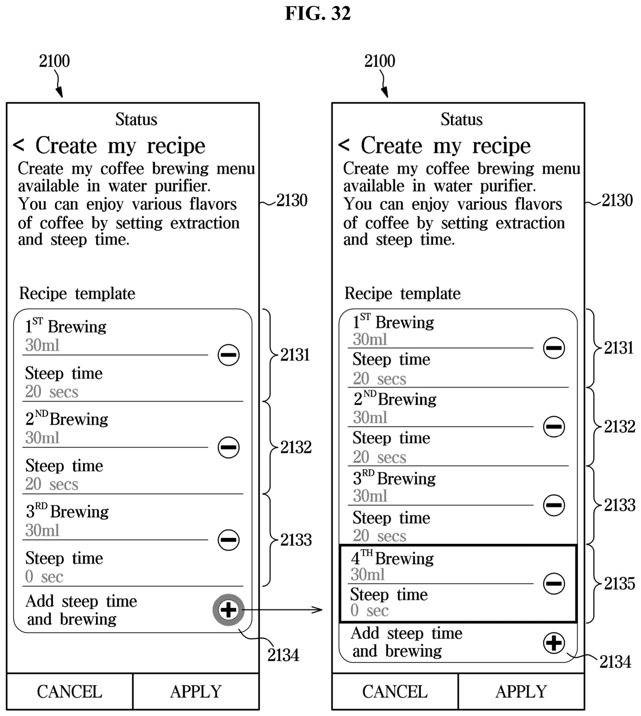

Referring to FIG. 32, the user may add a desired extraction stage to create 'my recipe'.

The my-recipe setting UI 2130 may include an add my-recipe setting UI element 2134.

When the user selects the add my-recipe setting UI element 2134, a fourth my-recipe setting UI element 2135 may be additionally displayed on the my-recipe setting UI 2130.

The fourth my-recipe setting UI element 2135 may be a UI element for fourth extraction of brewed coffee. The fourth my-recipe setting UI element 2135 may set fourth brewing and steep time for the fourth extraction.

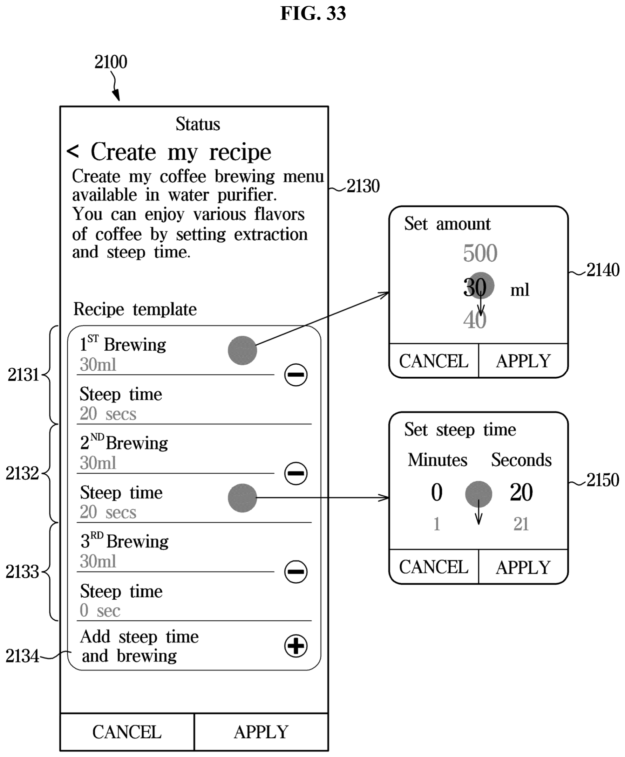

Referring to FIG. 33, the extraction amount and steep time for each extraction stage may be freely selected through the my-recipe setting UI elements 2131 to 2133.

In an embodiment, when the user selects "1^{ST} brewing" on the first my-recipe setting UI element 2131, an extraction amount setting UI 2140 for setting an amount of extraction may be displayed. The user may set a first extraction amount by selecting a desired first extraction amount on the extraction amount setting UI 2140.

In an embodiment, when the user selects "steep time" on the second my-recipe setting UI element 2132, a steep time setting UI 2150 for setting a steep time may be displayed. The user may set a second steep time by selecting a desired second steep time on the steep time setting UI 2150.

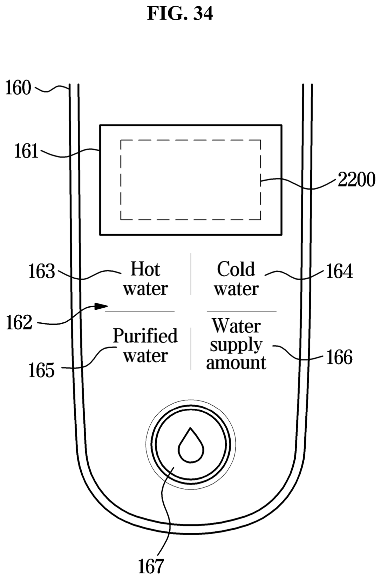

FIGS. 34 to 37 illustrate recipe selection operations to select a coffee brewing recipe in a water purifier, according to another embodiment of the disclosure.

Referring to FIG. 34, shown is the user interface device 160 of the water purifier 1'.

The user interface device 160 may include the output interface 161 and the input interface 162.

The input interface 162 may include a hot water button 163, a cold water button 164, a purified water button 165, a water supply amount button 166 and a water supply button 167.

When connected to the external device 600 or 700 for communication, the controller 800 may activate a brewing mode to control the water supply operation according to the coffee brewing recipe. In an embodiment, when the water purifier 1' is plugged into the server 700, the water purifier 1' may activate the brewing mode.

The controller 800 may display a recipe selection operation UI 2200 to select a coffee brewing recipe on the output interface 161 in response to the hot water button 163 being operated. The controller 800 may maintain the initial state of the recipe selection operation UI 2200 to be an off state even when the brewing mode is activated, until the hot water button is operated.

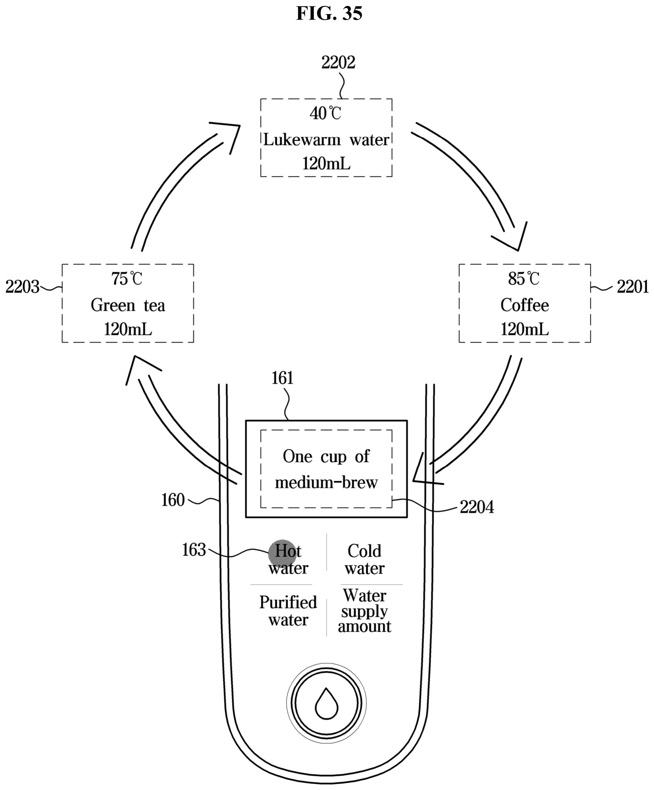

Referring to FIG. 35, the controller 35 may receive a coffee brewing recipe from the external device 600 or 700. The controller 800 may display a hot water recipe of the hot water mode and the received coffee brewing recipe on the output interface 161. In an embodiment, the hot water recipe may include a first hot water recipe 2201 of "85°C, coffee and 120 mL", a second hot water recipe 2202 of "40°C, lukewarm water, and 120 mL", and a third hot water recipe 2203 of "75C°, green tea and 120 mL". The coffee brewing recipe may include a first coffee brewing recipe 2204 of "one cup of medium-brew".

The controller 800 may display the hot water recipe and the coffee brewing recipe in sequence on the output interface 161 each time the hot water button 163 is operated. For example, whenever the hot water button 163 is operated, " 85°C, coffee and 120 mL", "40°C, lukewarm water, and 120 mL", "75°C, green tea and 120 mL" and "one cup of medium-brew" may be displayed in sequence.

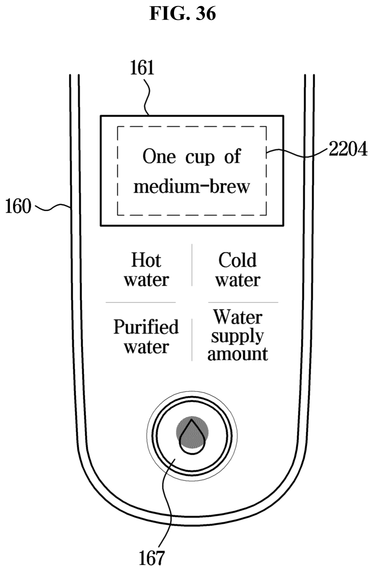

Referring to FIG. 36, when the first coffee brewing recipe 2204 of one cup of medium-brew is selected by the user, the controller 800 may display "one cup of medium-brew" on the output interface 161, and when the user operates the water supply button 167, the controller 800 may extract one cup of medium-brewed coffee by performing a water supply operation according to the first coffee brewing recipe 2204 of "one cup of medium-brew".

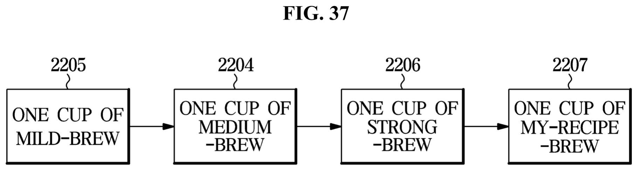

Referring to FIG. 37, the coffee brewing recipe may include a plurality of coffee brewing recipes.

In the case that the coffee brewing recipe includes a plurality of coffee brewing recipes, each coffee brewing recipe may be displayed on the output interface 161 from the coffee brewing recipe part each time the hot water button 163 is operated.

In an embodiment, when the plurality of coffee brewing recipes correspond to "one cup of mild-brew" 2205, "one cup of medium-brew" 2206, "one cup of strong-brew" 2207 and "one cup of my-recipe brew" 2208, "one cup of mild-brew" 2205, "one cup of medium-brew" 2206, "one cup of strong-brew" 2207 and "one cup of my-recipe brew" 2208 may be displayed in sequence each time the hot water button 163 is pressed. The user may then select a desired coffee brewing recipe.

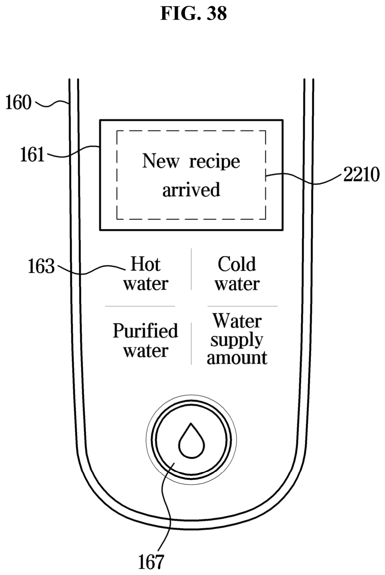

FIGS. 38 to 41 illustrate recipe selection operations to select a newly received coffee brewing recipe in a water purifier, according to another embodiment of the disclosure.

Referring to FIG. 38, the controller 35 may receive a new coffee brewing recipe from the external device 600 or 700.

On receiving the new coffee brewing recipe, the controller 800 may display an information message 2210 indicating that a new recipe has arrived on the output interface 161.

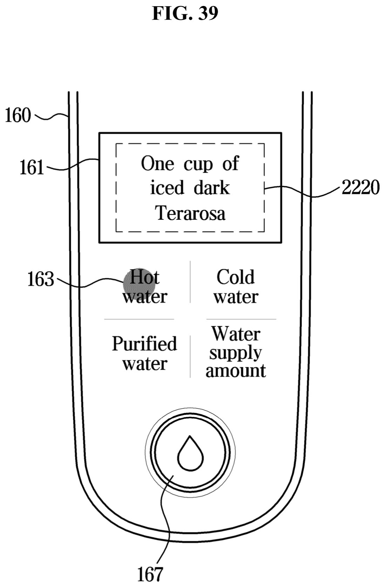

Referring to FIG. 39, the controller 800 may display the received new coffee brewing recipe on the output interface 161 when the hot water button 163 is operated. In an embodiment, when the hot water button 163 is operated, the received new brewing recipe "one cup of iced dark Terarosa" 2220 may be displayed on the output interface 161.

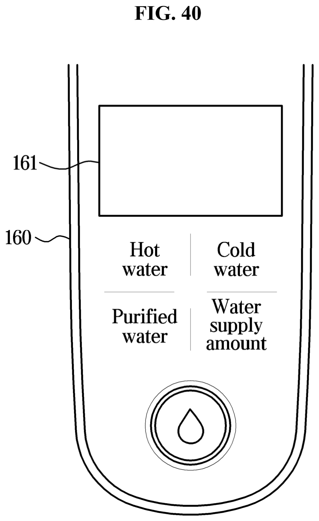

Referring to FIG. 40, the screen of the output interface 161 may be turned off unless the hot water button 163 is operated for a preset time in FIG. 38.

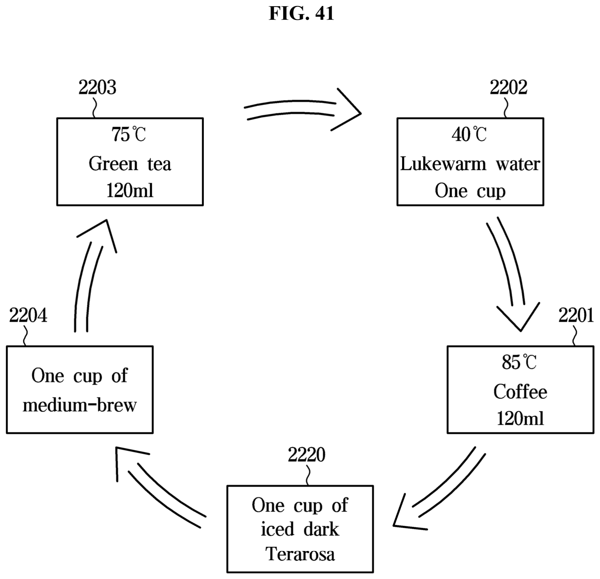

Referring to FIG. 41, the hot water recipe and the coffee brewing recipe including the new coffee brewing recipe may be displayed in sequence on the output interface 161 each time the hot water button 163 is operated.

In an embodiment, when the new coffee brewing recipe is "one cup of iced dark Terarosa", " 85°C, coffee and 120 mL" 2201, "40C°, lukewarm water and 120 mL" 2202, "75°C, green tea and 120 mL" 2203 and "one cup of medium-brew" 2204, and "one cup of iced dark Terarosa" may be displayed in sequence whenever the hot water button 163 is operated.

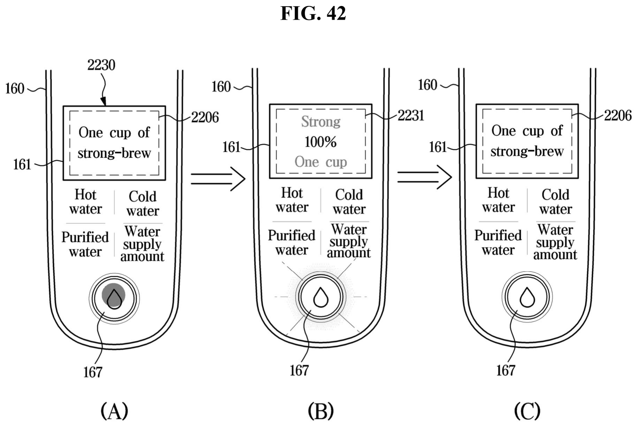

FIG. 42 illustrates an example of a water supply operation depending on the coffee brewing recipe in a water purifier, according to another embodiment of the disclosure.

Referring to FIG. 42, the controller 800 may display a water supply operation UI 2230 on the output interface 161 to inform a water supply operation depending on the coffee brewing recipe selected by the user.

In (A) of FIG. 42, the controller 800 may display "one cup of strong-brew" 2206 selected by the user in the water supply operation UI 2230.

In (B) of FIG. 42, the controller 800 may display a state of progress of the water supply operation according to "one cup of strong-brew" 2206. In an embodiment, when the water supply operation has progressed to 100%, the controller 800 may display "strong one cup 100%" 2231. Color of the letters may vary depending on the state of progress. In this case, the water supply button 167 may flicker to indicate that the water supply operation is in progress.

In (C) of FIG. 42, the controller 800 may display "one cup of strong-brew" 2206 when the water supply operation is completed. The user may then recognize that the water supply operation according to the coffee brewing recipe of "one cup of strong-brew" is completed.

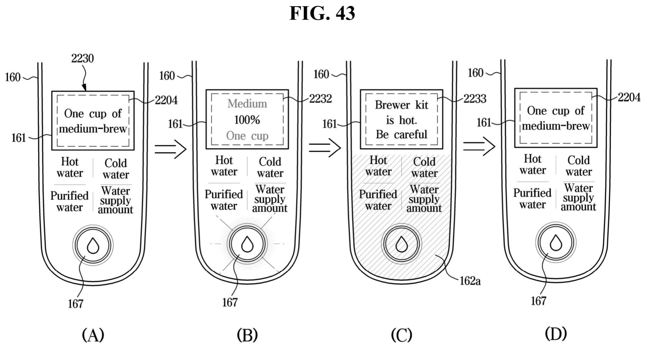

FIG. 43 illustrates another example of a water supply operation depending on the coffee brewing recipe in a water purifier, according to another embodiment of the disclosure.

In (A) of FIG. 43, the controller 800 may display "one cup of medium-brew" 2204 selected by the user in the water supply operation UI 2230.

In (B) of FIG. 43, the controller 800 may display a state of progress of the water supply operation according to "one cup of medium-brew" 2204. In an embodiment, when the water supply operation has progressed to 100%, the controller 800 may display "medium one cup 100%" 2232. Color of the letters may vary depending on the state of progress.

In (C) of FIG. 43, the controller 800 may display "Brewer kit is hot. Be careful" 2233 when the water supply operation is completed. The brewer kit may be a term that includes the nozzle assembly 500. The user may then recognize that the water supply operation according to the coffee brewing recipe of "one cup of strong-brew" is completed. With this, the controller 800 may display the area 162a including the hot water button 163, the cold water button 164, the purified water button 165, the water supply amount button 166 and the water supply button 167 in red. The user may then visually recognize that the brewer kit is hot.

In (D) of FIG. 43, the controller 800 may display "one cup of medium-brew" 2204 when the water supply operation is completed. The user may then recognize that the water supply operation according to the coffee brewing recipe of "one cup of medium-brew" is completed.

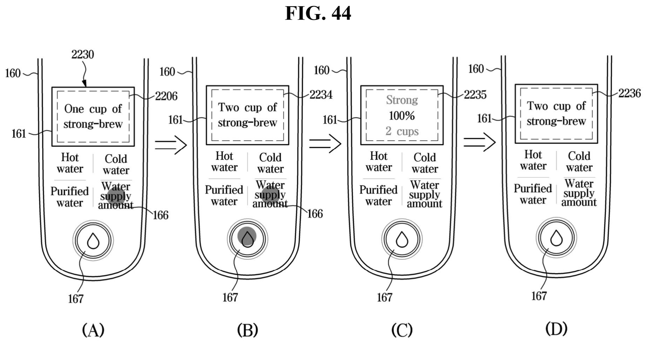

FIG. 44 illustrates a water supply amount setting operation to set an amount of water supply for a 'strong' recipe in a water purifier, according to another embodiment of the disclosure.

In (A) of FIG. 44, the controller 800 may display "one cup of strong-brew" 2206 selected by the user on the water supply operation UI 2230.

In (B) of FIG. 44, the user may increase the water supply amount of the strong recipe in response to operation of the water supply amount button 166. When the user presses the water supply amount button 166, the controller 800 may display "two cups of strong-brew" 2234. That is, an increased state from one cup to two cups may be displayed.

In (C) of FIG. 44, the controller 800 may display a state of progress of the water supply operation according to "two cups of strong-brew" 2234. In an embodiment, when the water supply operation has progressed to 100%, the controller 800 may display "strong two cups 100%" 2235. Color of the text may vary depending on the state of progress.

In (D) of FIG. 44, the controller 800 may display "two cups of strong-brew" 2236 when the water supply operation is completed. The user may then recognize that the water supply operation according to the coffee brewing recipe of "two cups of strong-brew" is completed.

According to an embodiment of the disclosure, the water purifier 1 includes a main body 10; a water supply assembly 100 connected to the main body and releasing water supplied from the main body; and a nozzle assembly 500 detachably coupled to the water supply assembly and including a water supply path 500a, wherein the water supply path includes an inflow port 520a through which water flows from the water supply assembly to the nozzle assembly; and a plurality of outflow ports 540a through which water flows out of the nozzle assembly, and wherein an area of the inflow port 520a is larger than an area of the plurality of outflow ports 540a.

The nozzle assembly may include a case 510, 550, 510' or 550'; a flow path member 520, 530, 540 or 560 arranged in the case and defining the water supply path; and a fixer 522a or 562a protruding from the flow path member and fixing the nozzle assembly 500 to the water supply assembly 100.

The water supply assembly may include a housing 110; a pipe 175 arranged in the housing and connected to the flow path member; and a plurality of fixing members 190 arranged between the pipe and the flow path member in a radial direction of the pipe, wherein the fixer 522a or 562a may be arranged between the plurality of fixing members 190 based on the nozzle assembly 500 being coupled to the water supply assembly 100.

The nozzle assembly may further include a contact projection 522 protruding from an inner surface of the case to the flow path member and coming into contact with a side of the flow path member.

The case may include a plurality of cases, wherein the plurality of cases may include a first case 510 or 510' including a mounting groove 512 or 512'; and a second case 550 or 550' including a mounting projection 551 or 551' to be accommodated in the mounting groove based on the second case being coupled to the first case, wherein the first case and the second case may be coupled by rotation.

The water purifier may include a heat exchanger arranged in the main body and cooling or heating water; a communicator communicating with an external device; a user interface device; and a controller configured to control the water supply assembly and the heat exchanger based on one of a coffee brewing recipe received from the external device through the communicator or a coffee brewing recipe selected by a user through the user interface device.

The water purifier may further include a memory storing a plurality of coffee brewing recipes, wherein the user interface device may further include at least one button, and wherein the controller may be configured to control the user interface device to display a user interface (UI) for selecting one of the plurality of coffee brewing recipes stored in the memory based on the at least one button being operated.

The controller may be configured to control the user interface device to display a water supply operation UI for guiding a water supply operation according to the coffee brewing recipe.

A detector for detecting coupling between the nozzle assembly and the water supply assembly may be further included, wherein the controller may be configured to receive and store the coffee brewing recipe from the external device based on the coupling between the nozzle assembly and the water supply assembly being detected by the detector.

The water purifier may further include a detector configured to detect coupling between the nozzle assembly and the water supply assembly; and a memory storing a plurality of coffee brewing recipes, wherein the controller is configured to control the user interface device to display a recipe selection UI for receiving a selection of one of the plurality of coffee brewing recipes stored in the memory based on the coupling between the nozzle assembly and the water supply assembly detected by the detector.

The water purifier may further include a camera configured to obtain an image of an object, wherein the controller may be configured to obtain information about a brewed coffee type corresponding to an identification code recognized from an image obtained through the camera, and determine a coffee brewing recipe based on the information about the brewed coffee type, and store the determined coffee brewing recipe in the memory.

The water supply assembly may include a water supply valve, and the controller may be configured to count a number of coupling times based on a number of times of coupling between the nozzle assembly and the water supply assembly, and control the water supply valve to wash the nozzle assembly based on the number of coupling times reaching a preset number of times.

The controller may be configured to control the user interface device to display a washing cycle notification based on the number of coupling times reaching the preset number of times.

According to an embodiment of the disclosure, a method of controlling the water purifier including a heat exchanger arranged in a main body for cooling or heating water, an water supply assembly connected to the main body and releasing water supplied from the heat exchanger and a nozzle assembly detachably coupled to the water supply assembly and releasing water to the outside may include receiving a coffee brewing recipe from an external device through a communicator or receiving a selection of a coffee brewing recipe from a user through a user interface device; and controlling the water supply assembly and the heat exchanger based on one of the received coffee brewing recipe or the selected coffee brewing recipe.

The water purifier may further include a user interface device; and a memory storing a plurality of coffee brewing recipes, and the user interface device may further include at least one button, wherein the receiving of the selection of the coffee brewing recipe may include controlling the user interface device to display a user interface (UI) for selecting one of the plurality of coffee brewing recipes stored in the memory based on the at least one button being operated.

The method of controlling the water purifier may further include controlling the user interface device to display a water supply operation UI for guiding a water supply operation according to the coffee brewing recipe.

The water purifier may further include a memory storing a plurality of coffee brewing recipes, wherein the user interface device may further include at least one button, and wherein the receiving of the selection of the coffee brewing recipe may include detecting coupling between the nozzle assembly and the water supply assembly; and controlling the user interface device to display a recipe selection UI for receiving a selection of one of the plurality of coffee brewing recipes stored in the memory based on detection of the coupling between the nozzle assembly and the water supply assembly.

The water purifier may further include a camera configured to obtain an image of an object, the method of controlling the water purifier may further include obtaining information about a brewed coffee type corresponding to an identification code recognized from an image obtained through the camera; and determining a coffee brewing recipe based on the information about the brewed coffee type; and storing the determined coffee brewing recipe in the memory.

The method of controlling the water purifier may further include counting a number of coupling times based on a number of times of coupling between the nozzle assembly and the water supply assembly, and controlling the water supply assembly and the heat exchanger for the nozzle assembly to be washed based on the number of coupling times reaching a preset number of times.

The water supply assembly may include a water supply valve, and the controlling of the water supply assembly and the heat exchanger may include controlling the water supply valve and the heat exchanger to control a water supply amount and steep time for each extraction stage of the coffee brewing recipe.

Meanwhile, the embodiments of the disclosure may be implemented in the form of a storage medium for storing instructions to be carried out by a computer. The instructions may be stored in the form of program codes, and when executed by a processor, may generate program modules to perform operation in the embodiments of the disclosure.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the present disclosure, the aforementioned method according to the various embodiments of the present disclosure may be provided in a computer program product. The computer program product may be a commercial product that may be traded between a seller and a buyer. The computer program product may be distributed in the form of a storage medium (e.g., a compact disc read only memory (CD-ROM)), through an application store (e.g., play store^{™}), directly between two user devices (e.g., smart phones), or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

The embodiments of the disclosure have thus far been described with reference to accompanying drawings. It will be obvious to those of ordinary skill in the art that the disclosure may be practiced in other forms than the embodiments of the disclosure as described above without changing the technical idea or essential features of the disclosure. The above embodiments of the disclosure are only by way of example, and should not be construed in a limited sense. For example, the "brewed coffee", "brewed coffee type", "coffee brewing recipe", etc., as mentioned above are merely illustrative examples, and should not be construed to limit to coffee. The terms are to be interpreted as including tea or other similar drinks prepared in brewing styles.

## Claims

1. A water purifier comprising:
a main body;
a water supply assembly connected to the main body and releasing water supplied from the main body; and
a nozzle assembly detachably coupled to the water supply assembly and including a water supply path,
wherein the water supply path comprises
an inflow port through which water from the water supply assembly flows to the nozzle assembly; and
a plurality of outflow ports through which water flows out of the nozzle assembly, and
wherein an area of the inflow port is larger than an area of the plurality of outflow ports.

2. The water purifier of claim 1, wherein the nozzle assembly further comprises
a case;
a flow path member arranged in the case and defining the water supply path; and
a fixer protruding from the flow path member and fixing the nozzle assembly to the water supply assembly.

3. The water purifier of claim 2, wherein the water supply assembly comprises
a housing;
a pipe arranged in the housing and connected to the flow path member; and
a plurality of fixing members arranged between the pipe and the flow path member in a radial direction of the pipe, and
wherein the fixer is arranged between the plurality of fixing members based on the nozzle assembly being coupled to the water supply assembly.

4. The water purifier of claim 2, wherein the nozzle assembly further comprises a contact projection protruding from an inner surface of the case to the flow path member and coming into contact with a side of the flow path member.

5. The water purifier of claim 2, wherein:
the case comprises a plurality of cases,
the plurality of cases comprise
a first case including a mounting groove; and
a second case including a mounting projection to be accommodated in the mounting groove based on the second case being coupled to the first case,
the flow path member is arranged in the first case and the second case, and
the first case and the second case are coupled by rotation.

6. The water purifier of claim 1, comprising:
a heat exchanger arranged in the main body and cooling or heating water;
a communicator communicating with an external device;
a user interface device; and
a controller configured to control the water supply assembly and the heat exchanger based on one of a coffee brewing recipe received from the external device through the communicator or a coffee brewing recipe selected by a user through the user interface device.

7. The water purifier of claim 6, further comprising:
a memory storing a plurality of coffee brewing recipes,
wherein the user interface device may further include at least one button, and
wherein the controller is configured to control the user interface device to display a user interface (UI) for selecting one of the plurality of coffee brewing recipes stored in the memory based on the at least one button being operated.

8. The water purifier of claim 6, wherein the controller is configured to control the user interface device to display a water supply operation UI to guide a water supply operation according to the coffee brewing recipe.

9. The water purifier of claim 6, further comprising:
a detector for detecting coupling between the nozzle assembly and the water supply assembly,
wherein the controller is configured to receive and store the coffee brewing recipe from the external device based on the coupling between the nozzle assembly and the water supply assembly being detected by the detector.

10. The water purifier of claim 6, further comprising:
a detector configured to detect coupling between the nozzle assembly and the water supply assembly; and
a memory storing a plurality of coffee brewing recipes,
wherein the controller is configured to control the user interface device to display a recipe selection UI for receiving a selection of one of the plurality of coffee brewing recipes stored in the memory based on the coupling between the nozzle assembly and the water supply assembly detected by the detector.

11. The water purifier of claim 6, further comprising:
a camera configured to obtain an image of an object,
wherein the controller is configured to obtain information relating to a brewed coffee type corresponding to an identification code recognized from an image obtained through the camera, determine a coffee brewing recipe based on the information relating to the brewed coffee type, and store the determined coffee brewing recipe in the memory.

12. The water purifier of claim 6, wherein:
the water supply assembly comprises a water supply valve, and
the controller is configured to count a number of times of coupling between the nozzle assembly and the water supply assembly, and control the water supply valve for the nozzle assembly to be washed based on the number of coupling times reaching a preset number of times.

13. The water purifier of claim 12, wherein the controller is configured to control the user interface device to display a washing cycle notification based on the number of coupling times reaching the preset number of times.

14. A method of controlling a water purifier including a heat exchanger arranged in a main body for cooling or heating water, a water supply assembly connected to the main body and releasing water supplied from the heat exchanger and a nozzle assembly detachably coupled to the water supply assembly and releasing water to the outside, the method comprising:
receiving a coffee brewing recipe from an external device through a communicator or receiving a selection of a coffee brewing recipe from the user through a user interface device, and
controlling the water supply assembly and the heat exchanger based on one of the received coffee brewing recipe or the selected coffee brewing recipe.

15. The method of claim 14, wherein:
a plurality of coffee brewing recipes are stored in a memory,
the user interface device further comprises at least one button, and
the receiving of the selection of the coffee brewing recipe comprises controlling the user interface device to display a user interface (UI) for selecting one of the plurality of coffee brewing recipes stored in the memory based on the at least one button being operated.
